# EUROPÄISCHE PATENTSCHRIFT

(11) **EP 2 655 927 B1**
(45) Veröffentlichungstag und Bekanntmachung des Hinweises auf die Patenterteilung: **24.12.2014**
(21) Anmeldenummer: 11784678.2
(22) Anmeldetag: 21.11.2011
(51) Int. Cl.: F16H 3/62, F16H 3/66

(54) **MEHRSTUFENGETRIEBE IN PLANETENBAUWEISE**
MULTI-STAGE GEARBOX OF PLANETARY CONSTRUCTION
BOÎTE DE VITESSES MULTIÉTAGÉE À TRAINS PLANÉTAIRES

(30) Priorität: 20.12.2010 DE 102010063490
(43) Veröffentlichungstag der Anmeldung: 30.10.2013
(73) Patentinhaber: ZF Friedrichshafen AG, 88038 Friedrichshafen (DE)
(72) Erfinder: FELLMANN, Martin, 88045 Friedrichshafen (DE); BECK, Stefan, 88097 Eriskirch (DE); GUMPOLTSBERGER, Gerhard, 88048 Friedrichshafen (DE)
(86) Internationale Anmeldenummer: PCT/EP2011/070508
(87) Internationale Veröffentlichungsnummer: WO 2012/084367

(56) Entgegenhaltungen:
- DE-A1-102008 021 720
- DE-A1-102010 007 613
- DE-A1-102010 007 972

## Beschreibung

Die Erfindung betrifft ein Mehrstufengetriebe in Planetenbauweise, insbesondere Splittergetriebe einer Arbeitsmaschine, mit einem Gehäuse, in welchem vier Planetensätze und mehrere Wellen aufgenommen sind, und mit Schaltelementen, welche durch mindestens eine Bremse und Kupplungen gebildet sind und mittels deren gezielter Betätigung verschiedene Übersetzungsverhältnisse zwischen einer Antriebs- und einer Abtriebswelle darstellbar sind.

Ein derartiges Mehrstufengetriebe kommt vorzugsweise als Splittergetriebe bei Arbeitsmaschinen zum Einsatz, wobei darstellbare Gänge des Splittergetriebes durch eine gezielte Betätigung von Schaltelementen und einen hierbei innerhalb von Planetensätzen jeweils wirksamen Leistungsfluss definiert werden. Mit "Splittergetriebe" wird hierbei üblicherweise eine Getriebeeinheit bezeichnet, mit welcher mehrere Übersetzungsverhältnisse mit geringen Stufensprüngen darstellbar sind. Bei einem Gesamtgetriebe einer landwirtschaftlichen Arbeitsmaschine, wie beispielsweise einem Traktor, wird ein derartiges Splittergetriebe als Lastschaltgetriebe üblicherweise mit einem weiteren mehrgängigen Getriebe in Form eines Gruppengetriebes mit hohen Stufensprüngen kombiniert, so dass durch diese Kombination ein Gesamtgetriebe mit einer hohe Anzahl an darstellbaren Fahrstufen bei gleichzeitig hoher Spreizung erreichbar ist. Häufig kommen hierbei weitere Getriebeeinheiten in Form einer Kriechgang- und/oder einer Wendeeinheit hinzu.

Aus der EP 0495942 B1 ist ein Mehrstufengetriebe in Planetenbauweise bekannt, welches als Splittergetriebe einer landwirtschaftlichen Arbeitsmaschine mit einem Gruppengetriebe kombiniert wird. Dabei weist dieses Splittergetriebe ein Gehäuse auf, in welchem vier Planetensätze und mehrere Wellen angeordnet sind, von denen eine die Antriebswelle und eine andere die Abtriebswelle des Mehrstufengetriebes darstellt. Des Weiteren sind im Bereich der Wellen mehrere Schaltelemente vorgesehen, mittels deren gezielter Betätigung der Leistungsfluss innerhalb der vier Planetensätze variiert und damit verschiedene Übersetzungsverhältnisse zwischen der Antriebs- und der Abtriebswelle definierbar sind. Insgesamt sind hierdurch acht Übersetzungsverhältnisse des Mehrstufengetriebes darstellbar.

Weitere Mehrstufengetriebe sind aus den DE 102 010 007 613 bekannt.

Es ist die Aufgabe der vorliegenden Erfindung, ein Mehrstufengetriebe der eingangs genannten Art vorzuschlagen, mittels welchem eine hohe Anzahl an Übersetzungsverhältnisse mit einer geringen Bauteilanzahl und damit bei einem niedrigen Gewicht und geringem Herstellungsaufwand realisierbar ist. Ferner sollte sich eine nahezu geometrische Übersetzungsreihe darstellen lassen, sowie die Belastungen der einzelnen Getriebeelemente reduziert sein. Zudem sollen kleine und nahezu geometrische Stufensprünge zwischen den einzelnen Übersetzungsverhältnissen, sowie eine kompakte Bauweise möglich sein. Schließlich sollen hohe Verzahnungswirkungsgrade erreichbar sein.

Diese Aufgabe wird ausgehend vom Oberbegriff des Anspruchs 1 in Verbindung mit dessen kennzeichnenden Merkmalen gelöst. Die darauf folgenden, abhängigen Ansprüche geben dabei jeweils vorteilhafte Weiterbildungen der Erfindung wieder.

Demnach wird ein erfindungsgemäßes Mehrstufengetriebe in Planetenbauweise vorgeschlagen, welches in einem Gehäuse eine Antriebs- und eine Abtriebswelle, sowie weitere drehbare Wellen und vier Planetensätze aufnimmt. Die Planetensätze sind dabei bevorzugt in axialer Richtung betrachtet in der Reihenfolge erster Planetensatz, zweiter Planetensatz, dritter Planetensatz und vierter Planetensatz angeordnet und bevorzugt jeweils als Minusplanetensatz ausgebildet. Es ist jedoch ebenso denkbar, an Stellen, wo es die Bindbarkeit zulässt, einzelne oder mehrere der Minusplanetensätze in Plusplanetensätze umzuwandeln, wenn gleichzeitig eine Steg- und eine Hohlradanbindung getauscht und der Betrag der Standübersetzung um Eins erhöht wird. Zudem ist auch eine anderweitige Anordnung der Planetensätze in axialer Richtung als die oben beschriebene im Rahmen der Erfindung denkbar.

Bekanntlich umfasst ein einfacher Minusplanetensatz ein Sonnenrad, ein Hohlrad und einen Steg, welcher Planetenräder drehbar gelagert trägt, die jeweils mit dem Sonnenrad und dem Hohlrad kämmen. Bei festgesetztem Steg wird dabei eine zum Sonnenrad entgegengesetzte Drehrichtung des Hohlrades erreicht.

Im Gegensatz hierzu umfasst ein einfacher Plusplanetensatz ein Sonnenrad, ein Hohlrad und einen Steg, welcher innere und äußere Planetenräder drehbar gelagert trägt. Dabei kämmen alle inneren Planetenräder mit dem Sonnenrad und alle äußeren Planetenräder mit dem Hohlrad, wobei zudem jedes innere Planetenrad mit jeweils einem äußeren Planetenrad in Eingriff steht. Bei einem Festsetzen des Steges wird dabei eine gleiche Drehrichtung des Hohlrades gegenüber dem Sonnenrad erreicht.

Gemäß der Erfindung ist die Antriebswelle mit einem Steg eines dritten Planetensatzes verbunden und kann über eine erste Kupplung mit einer dritten Welle gekoppelt werden, welche mit einem Hohlrad eines zweiten Planetensatzes gekoppelt und mittels einer zweiten Kupplung mit einer vierten Welle lösbar verbindbar ist. Diese vierte Welle steht des Weiteren mit einem Sonnenrad des dritten Planetensatzes in Verbindung, wobei eine fünfte Welle mit einem Sonnenrad des zweiten Planetensatzes gekoppelt und mittels einer ersten Bremse am Gehäuse festgesetzt werden kann. Ferner verbindet eine sechste Welle ein Hohlrad des dritten Planetensatzes mit einem Steg des zweiten Planetensatzes. Schließlich ist noch die Abtriebswelle mit einem Steg eines vierten Planetensatzes gekoppelt.

Bevorzugt dient die Antriebswelle als Antrieb des Mehrstufengetriebes, d.h. zum Einleiten eines Drehmoments in das Mehrstufengetriebe. Sie ist daher insbesondere von einem Antriebsmotor, beispielsweise einem Verbrennungs- oder Elektromotor, antreibbar. Die Abtriebswelle dient dementsprechend bevorzugt als Abtrieb des Mehrstufengetriebes, d.h. zum Abgriff eines Drehmoments von dem Mehrstufengetriebe, insbesondere zum Betreiben eines Aggregats, beispielsweise einer Pumpe oder eines elektrischen Generators, oder eines Fahrzeugantriebs, beispielsweise eines Fahrzeugrads oder einer Fahrzeuggleiskette.

In Weiterbildung der Erfindung ist die vierte Welle zudem mit einem Sonnenrad des vierten Planetensatzes gekoppelt und kann mittels einer dritten Kupplung mit der Abtriebswelle verbunden werden. Die Abtriebswelle ist ferner über eine vierte Kupplung mit einer siebten Welle koppelbar, die mit einem Steg eines ersten Planetensatzes verbunden ist. Des Weiteren ist ein Sonnenrad des ersten Planetensatzes mit der fünften Welle und ein Hohlrad des ersten Planetensatzes mit der sechsten Welle gekoppelt. Schließlich ist noch ein Hohlrad des vierten Planetensatzes mit einer achten Welle verbunden, die mittels einer zweiten Bremse am Gehäuse festsetzbar ist.

Entsprechend einer alternativen Ausgestaltung der Erfindung ist die vierte Welle zudem mit einem Sonnenrad des vierten Planetensatzes gekoppelt und mittels einer dritten Kupplung mit der Abtriebswelle verbindbar. Dabei kann die sechste Welle über eine vierte Kupplung mit einer siebten Welle gekoppelt werden, die mit einem Hohlrad eines ersten Planetensatzes in Verbindung steht. Zudem ist ein Sonnenrad des ersten Planetensatzes mit der fünften Welle und ein Steg des ersten Planetensatzes mit der Abtriebswelle gekoppelt, wohingegen ein Hohlrad des vierten Planetensatzes mit einer achten Welle verbunden ist, die mittels einer zweiten Bremse am Gehäuse festgesetzt werden kann.

Weiter alternativ hierzu ist die vierte Welle zudem mit einem Sonnenrad des vierten Planetensatzes gekoppelt und mittels einer dritten Kupplung mit der Abtriebswelle verbindbar. Die fünfte Welle kann über eine vierte Kupplung mit einer siebten Welle gekoppelt werden, die mit einem Sonnenrad eines ersten Planetensatzes in Verbindung steht. Des Weiteren ist ein Steg des ersten Planetensatzes mit der Abtriebswelle und ein Hohlrad des ersten Planetensatzes mit der sechsten Welle gekoppelt. Schließlich ist noch ein Hohlrad des vierten Planetensatzes mit einer achten Welle verbunden, die mittels einer zweiten Bremse am Gehäuse festsetzbar ist.

Entsprechend einer weiteren, alternativen Ausgestaltung eines erfindungsgemäßen Mehrstufengetriebes ist die vierte Welle zudem mit einem Sonnenrad des vierten Planetensatzes gekoppelt und kann mittels einer dritten Kupplung mit einer achten Welle verbunden werden, die mit einem Hohlrad des vierten Planetensatzes gekoppelt und über eine zweite Bremse am Gehäuse festsetzbar ist. Ferner ist die fünfte Welle mittels einer vierten Kupplung mit einer siebten Welle koppelbar, welche mit einem Sonnenrad eines ersten Planetensatzes in Verbindung steht. Schließlich ist ein Steg des ersten Planetensatzes mit der Abtriebswelle und ein Hohlrad des ersten Planetensatzes mit der sechsten Welle verbunden.

Als weitere Alternative ist die vierte Welle zudem mit einem Sonnenrad des vierten Planetensatzes gekoppelt und mittels einer dritten Kupplung mit einer achten Welle verbindbar, die mit einem Hohlrad des vierten Planetensatzes gekoppelt und über eine zweite Bremse am Gehäuse festgesetzt werden kann. Des Weiteren ist die sechste Welle mittels einer vierten Kupplung mit einer siebten Welle koppelbar, welche mit einem Hohlrad eines ersten Planetensatzes in Verbindung steht. Zudem ist ein Steg des ersten Planetensatzes mit der Abtriebswelle und ein Sonnenrad des ersten Planetensatzes mit der fünften Welle verbunden.

Gemäß einer weiteren, alternativen Ausführung eines erfindungsgemäßen Mehrstufengetriebes ist die vierte Welle zudem mit einem Sonnenrad des vierten Planetensatzes gekoppelt und kann mittels einer dritten Kupplung mit einer achten Welle verbunden werden, die mit einem Hohlrad des vierten Planetensatzes gekoppelt und über eine zweite Bremse am Gehäuse festsetzbar ist. Die Abtriebswelle ist ferner mittels einer vierten Kupplung mit einer siebten Welle koppelbar, welche mit einem Steg eines ersten Planetensatzes in Verbindung steht. Schließlich ist noch ein Sonnenrad des ersten Planetensatzes mit der fünften Welle und ein Hohlrad des ersten Planetensatzes mit der sechsten Welle verbunden.

Weiter alternativ hierzu kann die Abtriebswelle mittels einer dritten Kupplung mit einer achten Welle verbunden werden, welche mit einem Hohlrad des vierten Planetensatzes gekoppelt und über eine zweite Bremse am Gehäuse festsetzbar ist. Des Weiteren steht die vierte Welle mit einem Sonnenrad des vierten Planetensatzes in Verbindung, wohingegen die fünfte Welle über eine vierte Kupplung mit einer siebten Welle koppelbar ist, die mit einem Sonnenrad eines ersten Planetensatzes verbunden ist. Schließlich ist ein Steg des ersten Planetensatzes mit der Abtriebswelle und ein Hohlrad des ersten Planetensatzes mit der sechsten Welle gekoppelt.

Entsprechend einer weiteren, alternativen Variante eines erfindungsgemäßen Mehrstufengetriebes ist die Abtriebswelle mittels einer dritten Kupplung mit einer achten Welle verbindbar, welche mit einem Hohlrad des vierten Planetensatzes gekoppelt ist und über eine zweite Bremse am Gehäuse festgesetzt werden kann. Ferner steht die vierte Welle mit einem Sonnenrad des vierten Planetensatzes in Verbindung, wobei die sechste Welle über eine vierte Kupplung mit einer siebten Welle koppelbar ist, die mit einem Hohlrad eines ersten Planetensatzes verbunden ist. Des Weiteren ist ein Steg des ersten Planetensatzes mit der Abtriebswelle und ein Sonnenrad des ersten Planetensatzes mit der fünften Welle gekoppelt.

Als weitere Alternative kann die Abtriebswelle mittels einer dritten Kupplung mit einer achten Welle verbunden werden, welche mit einem Hohlrad des vierten Planetensatzes gekoppelt und über eine zweite Bremse am Gehäuse festsetzbar ist. Zudem steht die vierte Welle mit einem Sonnenrad des vierten Planetensatzes in Verbindung und die Abtriebswelle ist zusätzlich über eine vierte Kupplung mit einer siebten Welle koppelbar, die mit einem Steg eines ersten Planetensatzes verbunden ist. Schließlich ist ein Hohlrad des ersten Planetensatzes mit der sechsten Welle und ein Sonnenrad des ersten Planetensatzes mit der fünften Welle gekoppelt.

In den vorgenannten Fällen ergibt sich ein erstes Übersetzungsverhältnis durch Schließen der zweiten Bremse, sowie der ersten und zweiten Kupplung, wohingegen ein zweites Übersetzungsverhältnis durch Betätigen beider Bremsen, sowie der zweiten Kupplung wählbar ist. Ein drittes Übersetzungsverhältnis wird durch Schließen beider Bremsen, sowie der ersten Kupplung geschaltet. Des Weiteren ergibt sich ein viertes Übersetzungsverhältnis durch Betätigen beider Bremsen, sowie der vierten Kupplung, wobei ein fünftes Übersetzungsverhältnis durch Schließen der ersten Bremse, sowie der ersten und vierten Kupplung geschaltet werden kann. Ferner ist ein sechstes Übersetzungsverhältnis durch Betätigen der ersten Bremse, sowie der zweiten und vierten Kupplung darstellbar, wohingegen sich ein siebtes Übersetzungsverhältnis durch Schließen der ersten Bremse, sowie der dritten und vierten Kupplung ergibt. Ein achtes Übersetzungsverhältnis wird durch Betätigen der zweiten, dritten und vierten Kupplung geschaltet. Alternativ hierzu ist das achte Übersetzungsverhältnis auch durch Schließen der ersten, zweiten und vierten Kupplung oder durch Betätigen der ersten, zweiten und dritten Kupplung oder durch Schließen der ersten, dritten und vierten Kupplung darstellbar. Schließlich ist ein neuntes Übersetzungsverhältnis durch Betätigen der ersten Bremse, sowie der zweiten und dritten Kupplung wählbar, wohingegen sich ein zehntes Übersetzungsverhältnis durch Schließen der ersten Bremse, sowie der ersten und dritten Kupplung ergibt. Folglich sind durch die erfindungsgemäßen Ausgestaltungen eines Mehrstufengetriebes jeweils zehn Übersetzungsverhältnisse darstellbar.

In Weiterbildung der Erfindung ergibt sich ein erstes zusätzliches Übersetzungsverhältnis durch Schließen der zweiten Bremse, sowie der zweiten und vierten Kupplung, und ein zweites zusätzliches Übersetzungsverhältnis durch Betätigen der zweiten Bremse, sowie der ersten und vierten Kupplung. Hierdurch kann die Anzahl darstellbarer Gänge auf insgesamt zwölf gesteigert werden.

Entsprechend einer alternativen Ausführungsform der Erfindung ist die Abtriebswelle zudem über eine dritte Kupplung mit der vierten Welle und mittels einer vierten Kupplung mit einer siebten Welle lösbar verbindbar, welche mit einem Steg eines ersten Planetensatzes gekoppelt ist. Ferner ist ein Sonnenrad des ersten Planetensatzes mit der fünften Welle und ein Hohlrad des ersten Planetensatzes mit der sechsten Welle verbunden. Schließlich ist noch ein Hohlrad des vierten Planetensatzes starr mit dem Gehäuse gekoppelt und die vierte Welle mittels einer fünften Kupplung mit einer achten Welle verbindbar, die mit einem Sonnenrad des vierten Planetensatzes in Verbindung steht.

Alternativ hierzu kann die Abtriebswelle zudem über eine dritte Kupplung mit der vierten Welle und die sechste Welle mittels einer vierten Kupplung mit einer siebten Welle lösbar verbunden werden, welche mit einem Hohlrad eines ersten Planetensatzes gekoppelt ist. Des Weiteren steht ein Steg des ersten Planetensatzes mit der Abtriebswelle und ein Sonnenrad des ersten Planetensatzes mit der fünften Welle in Verbindung. Schließlich ist ein Hohlrad des vierten Planetensatzes starr mit dem Gehäuse gekoppelt und die vierte Welle mittels einer fünften Kupplung mit einer achten Welle verbindbar, die mit einem Sonnenrad des vierten Planetensatzes in Verbindung steht.

Als weitere, alternative Ausgestaltung eines erfindungsgemäßen Mehrstufengetriebes kann die Abtriebswelle zudem über eine dritte Kupplung mit der vierten Welle und die fünfte Welle mittels einer vierten Kupplung mit einer siebten Welle lösbar verbunden werden, die mit einem Sonnenrad eines ersten Planetensatzes gekoppelt ist. Zudem steht ein Steg des ersten Planetensatzes mit der Abtriebswelle und ein Hohlrad des ersten Planetensatzes mit der sechsten Welle in Verbindung, wohingegen ein Hohlrad des vierten Planetensatzes starr mit dem Gehäuse gekoppelt und die vierte Welle mittels einer fünften Kupplung mit einer achten Welle verbindbar ist, die mit einem Sonnenrad des vierten Planetensatzes in Verbindung steht.

In den letztgenannten Fällen ergibt sich ein erstes Übersetzungsverhältnis durch Schließen der ersten, zweiten und fünften Kupplung, wohingegen ein zweites Übersetzungsverhältnis durch Betätigen der ersten Bremse, sowie der zweiten und fünften Kupplung wählbar ist. Ferner wird ein drittes Übersetzungsverhältnis durch Schließen der ersten Bremse, sowie der ersten und fünften Kupplung geschaltet. Des Weiteren ergibt sich ein viertes Übersetzungsverhältnis durch Betätigen der ersten Bremse, sowie der vierten und fünften Kupplung, ein darauffolgendes, fünftes Übersetzungsverhältnis durch Schließen der ersten Bremse, sowie der ersten und vierten Kupplung. Ein sechstes Übersetzungsverhältnis wird durch Betätigen der ersten Bremse, sowie der zweiten und vierten Kupplung geschaltet, wohingegen ein siebtes Übersetzungsverhältnis durch Schließen der ersten Bremse, sowie der dritten und vierten Kupplung wählbar ist. Ferner ergibt sich in achtes Übersetzungsverhältnis durch Betätigen der zweiten, dritten und vierten Kupplung. Alternativ hierzu ist das achte Übersetzungsverhältnis auch durch Schließen der ersten, zweiten und vierten Kupplung oder durch Betätigen der ersten, zweiten und dritten Kupplung oder durch Schließen der ersten, dritten und vierten Kupplung darstellbar. Ein neuntes Übersetzungsverhältnis ergibt sich durch Betätigen der ersten Bremse, sowie der zweiten und dritten Kupplung, wobei ein zehntes Übersetzungsverhältnis durch Schließen der ersten Bremse, sowie der ersten und dritten Kupplung geschaltet wird. Auch in diesen Fällen wird somit jeweils ein Mehrstufengetriebe mit zehn darstellbaren Übersetzungsverhältnissen realisiert.

In Weiterbildung der Erfindung ergibt sich ein erstes zusätzliches Übersetzungsverhältnis durch Schließen der zweiten, vierten und fünften Kupplung, und ein zweites zusätzliches Übersetzungsverhältnis kann durch Betätigen der ersten, vierten und fünften Kupplung geschaltet werden. Somit ist erneut eine Erweiterung auf insgesamt zwölf darstellbare Gänge möglich.

In Weiterbildung der Erfindung ist die Antriebswelle des Mehrstufengetriebes zur Realisierung eines Nebenabtriebs insbesondere durch das Mehrstufengetriebe hindurchgeführt und dient dabei neben der Abtriebswelle als zusätzlicher zweiter Abtrieb, beispielsweise im Sinne eines Zapfwellenabtriebs für austauschbare Nebenaggregate.

Grundsätzlich umfasst die Erfindung auch Ausführungen des Mehrstufengetriebes, bei denen Antrieb und Abtrieb kinematisch gegeneinander vertauscht sind. Hierbei dient die genannte Abtriebswelle des Mehrstufengetriebes als dessen Antrieb, d.h. zum Einleiten eines Drehmoments in das Mehrstufengetriebe, beispielsweise mittels eines Antriebsmotors, und die genannte Antriebswelle des Mehrstufengetriebes dient als dessen Abtrieb, d.h. zum Abgriff eines Drehmoments von dem Mehrstufengetriebe, beispielsweise zum Betreiben eines Aggregats oder Fahrzeugantriebs. In einem Schaltschema des Mehrstufengetriebes kehrt sich die Reihenfolge der Übersetzungsverhältnisse dann entsprechend um.

Mittels der einzelnen erfindungsgemäßen Ausgestaltungen eines Mehrstufengetriebes ist es möglich, die jeweiligen Übersetzungsverhältnisse mit einer niedrigen Anzahl an Bauteilen zu realisieren und somit den Herstellungsaufwand und das Gewicht gering zu halten. Zudem ergeben sich hierbei eine insbesondere für ein Splittergetriebe einer Arbeitsmaschine geeignete nahezu geometrische Übersetzungsreihe und jeweils kleine Stufensprünge, welche ebenfalls nahezu geometrisch ausgestaltet sind.

Ferner zeichnen sich die einzelnen Ausgestaltungen des erfindungsgemäßen Mehrstufengetriebes durch niedrige Absolut- und Relativdrehzahlen, sowie niedrige Planetensatz- und Schaltelementmomente aus, was sich auf deren Dimensionierung und deren Lebensdauer positiv auswirkt. Insgesamt lassen sich zudem gute Verzahnungswirkungsgrade sowie eine kompakte Bauweise erreichen.

Die Erfindung ist nicht auf die angegebene Kombination der Merkmale des Hauptanspruchs und der abhängigen Ansprüche beschränkt. Es ergeben sich darüber hinaus Möglichkeiten, einzelne Merkmale, auch soweit sie aus den Ansprüchen, der nachfolgenden Beschreibung der Ausführungsbeispiele oder unmittelbar aus den Zeichnungen hervorgehen, miteinander zu kombinieren. Die Bezugnahme der Ansprüche auf die Zeichnungen durch die Verwendung von Bezugszeichen soll den Schutzumfang der Ansprüche nicht beschränken.

Weitere, die Erfindung verbessernden Maßnahmen werden nachstehend gemeinsam mit der Beschreibung bevorzugter Ausführungsformen der Erfindung näher dargestellt. Es zeigt:
- Fig. 1: eine schematische Ansicht einer ersten bevorzugten Ausführungsform eines erfindungsgemäßen Mehrstufengetriebes;
- Fig. 2: ein beispielhaftes Schaltschema für ein Mehrstufengetriebe gemäß Fig. 1;
- Fig. 3: eine schematische Ansicht einer zweiten bevorzugten Ausführungsform eines erfindungsgemäßen Mehrstufengetriebes;
- Fig. 4: eine schematische Ansicht einer dritten bevorzugten Ausführungsform eines erfindungsgemäßen Mehrstufengetriebes;
- Fig. 5: eine schematische Ansicht einer weiteren, vierten bevorzugten Ausführungsform eines erfindungsgemäßen Mehrstufengetriebes;
- Fig. 6: eine schematische Ansicht einer fünften bevorzugten Ausführungsform eines erfindungsgemäßen Mehrstufengetriebes;
- Fig. 7: eine weitere schematische Ansicht einer sechsten bevorzugten Ausführungsform eines erfindungsgemäßen Mehrstufengetriebes;
- Fig. 8: eine schematische Ansicht einer weiteren, siebten bevorzugten Ausführungsform eines erfindungsgemäßen Mehrstufengetriebes;
- Fig. 9: eine schematische Darstellung einer achten bevorzugten Ausführungsform eines erfindungsgemäßen Mehrstufengetriebes;
- Fig. 10: eine schematische Ansicht einer weiteren, neunten bevorzugten Ausführungsform eines erfindungsgemäßen Mehrstufengetriebes;
- Fig. 11: eine weitere, schematische Ansicht einer zehnten bevorzugten Ausführungsform eines erfindungsgemäßen Mehrstufengetriebes;
- Fig. 12: eine schematische Ansicht einer weiteren, elften bevorzugten Ausführungsform eines erfindungsgemäßen Mehrstufengetriebes; und
- Fig. 13: eine schematische Ansicht einer zwölften bevorzugten Ausführungsform eines erfindungsgemäßen Mehrstufengetriebes.

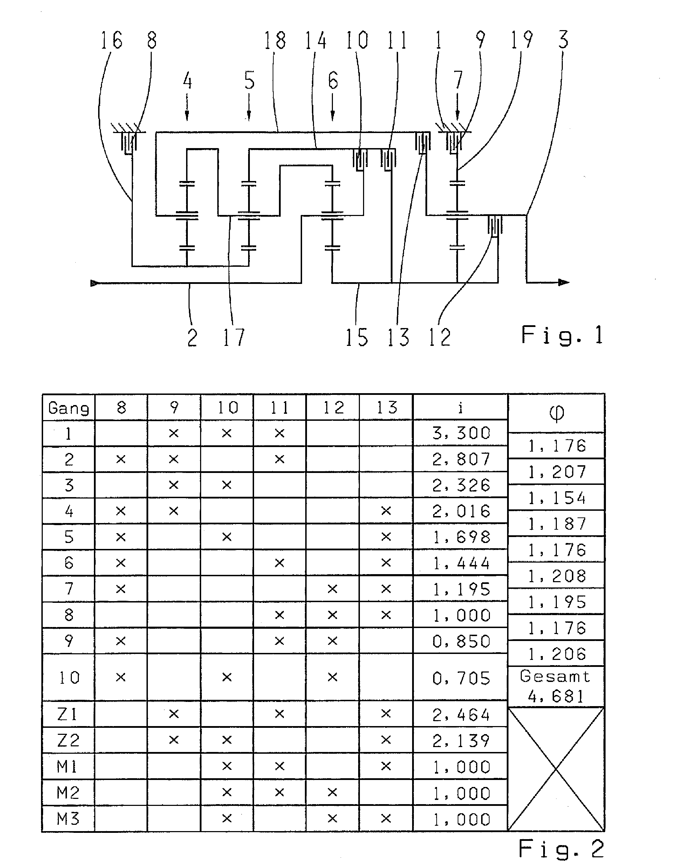

Aus Fig. 1 geht eine erste bevorzugte Ausführungsform eines erfindungsgemäßen Mehrstufengetriebes hervor, bei welchem es sich bevorzugt um ein Splittergetriebe eines Gesamtgetriebes einer Arbeitsmaschine handelt. Innerhalb des Gesamtgetriebes wird ein derartiges Splittergetriebe hierbei als Lastschaltgetriebe üblicherweise in Kombination mit einem Gruppengetriebe verwendet, so dass durch das Splittergetriebe mit niedrigen Stufensprüngen in Kombination mit dem Gruppengetriebe mit hohen Stufensprüngen eine sehr hohe Anzahl an darstellbaren Übersetzungsverhältnissen und eine große erreichbare Spreizung des Gesamtgetriebes möglich ist. Aufgrund dieser hohen Anzahl an darstellbaren Gängen eignet sich ein hierdurch gebildetes Gesamtgetriebe für die Anwendung bei einer landwirtschaftlichen Arbeitsmaschine. Des Weiteren erfolgt hierbei auch bevorzugt eine Kombination mit einer Kriechgang- und/oder einer Wendeeinheit. Dabei ist eine geometrische Reihenfolge der einzelnen Getriebeeinheiten im Gesamtgetriebe prinzipiell frei wählbar.

Wie aus Fig. 1 ersichtlich ist, verfügt das erfindungsgemäße Mehrstufengetriebe über ein Gehäuse 1, in welchem eine Antriebswelle 2, eine Abtriebswelle 3, sowie vier Planetensätze 4, 5, 6 und 7 aufgenommen sind. Hierbei sind die Planetensätze 4, 5, 6 und 7 jeweils als Minusplanetensätze ausgebildet, wobei erfindungsgemäß ebenso gut eine Ausbildung zumindest eines der Minusplanetensätze als Plusplanetensatz denkbar ist. Hierbei muss allerdings gleichzeitig eine Steg- und eine Hohlradanbindung getauscht und der Betrag der Standübersetzung im Vergleich zu der Ausführung als Minusplanetensatz um Eins erhöht werden. Vorliegend sind die Planetensätze 4, 5, 6 und 7 axial betrachtet in der Reihenfolge 4, 5, 6, 7 angeordnet.

Wie ferner aus Fig. 1 ersichtlich ist, umfasst das erfindungsgemäße Mehrstufengetriebe insgesamt sechs Schaltelemente, welche sich aus zwei Bremsen 8 und 9 und vier Kupplungen 10, 11, 12 und 13 zusammensetzen. Eine räumliche Anordnung dieser Schaltelemente kann dabei beliebig sein und wird nur durch deren Abmessungen, sowie die äußere Formgebung begrenzt. Im vorliegenden Fall sind die Bremsen 8 und 9 und die Kupplungen 10, 11, 12 und 13 jeweils als Lamellenschaltelement ausgeführt, wobei erfindungsgemäß aber ebenso gut auch eine Ausführung als formschlüssige Schaltelemente oder als anderweitige reibschlüssige Schaltelemente denkbar ist.

Mittels einer gezielten Betätigung der Schaltelemente ist ein selektives Schalten verschiedener Übersetzungsverhältnisse zwischen der Antriebswelle 2 und der Abtriebswelle 3 möglich. Zudem sind in dem Gehäuse 1 insgesamt acht drehbare Wellen aufgenommen, welche neben der Antriebswelle 2 und der Abtriebswelle 3 durch eine dritte Welle 14, eine vierte Welle 15, eine fünfte Welle 16, eine sechste Welle 17, eine siebte Welle 18 und eine achte Welle 19 gebildet sind.

Erfindungsgemäß ist die Antriebswelle 2 mit einem Steg des dritten Planetensatzes 6 verbunden und kann mittels der ersten Kupplung 10 mit der dritten Welle 14 verbunden werden, die mit einem Hohlrad des zweiten Planetensatzes 5 in Verbindung steht. Des Weiteren ist die dritte Welle 14 über die zweite Kupplung 11 mit der vierten Welle 15 lösbar verbindbar, wobei die vierte Welle 15 ein Sonnenrad des dritten Planetensatzes 6 mit einem Sonnenrad des vierten Planetensatzes 7 verbindet.

Die fünfte Welle 16 verbindet ein Sonnenrad des ersten Planetensatzes 4 mit einem Sonnenrad des zweiten Planetensatzes 5 und ist ferner über die erste Bremse 8 am Gehäuse 1 festsetzbar. Ein Hohlrad des ersten Planetensatzes 4 wird über die sechste Welle 17 mit einem Steg des zweiten Planetensatzes 5 und einem Hohlrad des dritten Planetensatzes 6 verbunden. Des Weiteren steht die Abtriebswelle 3 mit einem Steg des vierten Planetensatzes 7 in Verbindung und kann zum einen mittels der dritten Kupplung 12 mit der vierten Welle 15 und zum anderen über die vierte Kupplung 13 mit der siebten Welle 18 gekoppelt werden. Die siebte Welle 18 wiederum steht im weiteren Verlauf mit einem Steg des ersten Planetensatzes 4 in Verbindung. Schließlich ist noch ein Hohlrad des vierten Planetensatzes 7 mit der achten Welle 19 gekoppelt, die mittels der zweiten Bremse 9 am Gehäuse 1 festgesetzt werden kann.

Aus Fig. 2 geht ein beispielhaftes Schaltschema eines Mehrstufengetriebes gemäß Fig. 1 hervor, wobei hierbei zum Schalten jedes Übersetzungsverhältnisses drei der sechs Schaltelemente geschlossen sind und zum Schalten in ein jeweils benachbartes Übersetzungsverhältnis der Zustand zweier Schaltelemente zu variieren ist. Dabei können aus dem beispielhaften Schaltschema die jeweiligen Übersetzungen i in den einzelnen Übersetzungsverhältnissen, sowie die sich ergebenden Gangsprünge ϕ zum jeweils benachbarten Gang beispielhaft entnommen werden. Diese Werte werden hierbei bei bevorzugten Standübersetzungen der Planetensätze 4, 5, 6 und 7 erreicht, welche beim ersten Planetensatz 4 und beim zweiten Planetensatz 5 -3,300, beim dritten Planetensatz 6 -1,800 und beim vierten Planetensatz 7 -2,300 betragen. Ferner ist eine Spreizung des Getriebes von 4,681 der Fig. 2 entnehmbar.

Wie aus Fig. 2 hervorgeht, umfasst eine Übersetzungsreihe des erfindungsgemäßen Mehrstufengetriebes nach Fig. 1 zehn Übersetzungsverhältnisse, wobei optional noch weitere zwei Übersetzungsverhältnisse darstellbar sind, die mit Z1 und Z2 bezeichnet sind. Des Weiteren lässt sich ein achtes Übersetzungsverhältnis durch insgesamt vier Schaltvarianten darstellen.

Ein erstes Übersetzungsverhältnis ergibt sich durch Schließen der zweiten Bremse 9, sowie der ersten Kupplung 10 und der zweiten Kupplung 11. Zum Schalten in ein nächstes, zweites Übersetzungsverhältnis ist dann die erste Kupplung 10 zu öffnen und die erste Bremse 8 zu betätigen, wobei zum Darstellen eines daran anschließenden, dritten Übersetzungsverhältnisses die zweite Kupplung 11 zu öffnen und die erste Kupplung 10 wiederum zu betätige ist. Ausgehend vom dritten Übersetzungsverhältnis ergibt ein viertes Übersetzungsverhältnis, indem die erste Kupplung 10 wiederum geöffnet und die vierte Kupplung 13 geschlossen wird, während zum Wählen eines fünften Übersetzungsverhältnisses die zweite Bremse 9 zu lösen und die erste Kupplung 10 erneut zu betätigen ist. Ein sechstes Übersetzungsverhältnis ergibt sich, indem ausgehend vom fünften Übersetzungsverhältnis die erste Kupplung 10 wieder geöffnet und die zweite Kupplung 11 betätigt wird. Zum weiteren Hochschalten in ein siebtes Übersetzungsverhältnis ist dann die zweite Kupplung 11 wiederum zu lösen und die dritte Kupplung 12 zu schließen. Zum Wählen des nächst höheren, achten Übersetzungsverhältnisses ist dann die erste Bremse 8 zu öffnen und die zweite Kupplung 11 zu betätigen, wobei alternativ hierzu auch eine Darstellung des achten Übersetzungsverhältnisses durch Schließen der ersten Kupplung 10, der zweiten Kupplung 11 und der vierten Kupplung 13 oder durch betätigen der ersten Kupplung 10, der zweiten Kupplung 11 und der dritten Kupplung 12 oder durch Schließen der ersten Kupplung 10, der dritten Kupplung 12 und der vierten Kupplung 13 möglich ist. Diese Schaltalternativen sind indem beispielhaften Schaltschema in Fig. 2 mit M1 bis M3 bezeichnet. Des Weiteren ergibt sich ein neuntes Übersetzungsverhältnis durch Betätigen der ersten Bremse 8, sowie der zweiten Kupplung 11 und der dritten Kupplung 12. Schließlich wird ein zehntes Übersetzungsverhältnis geschaltet, in dem ausgehend vom neunten Übersetzungsverhältnis die zweite Kupplung 11 zu lösen und die erste Kupplung 10 zu betätigen ist.

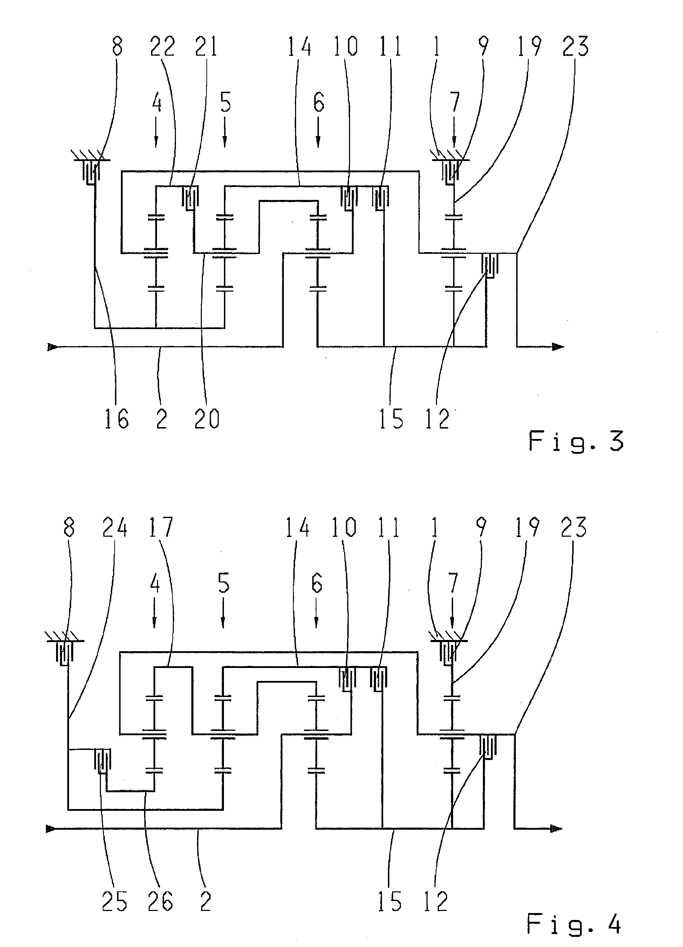

In Fig. 3 ist eine zweite bevorzugte Ausführungsform eines erfindungsgemäßen Mehrstufengetriebes dargestellt. Im Unterschied zu der im Vorfeld beschriebenen Variante verbindet eine sechste Welle 20 einen Steg des zweiten Planetensatzes 5 mit einem Hohlrad des dritten Planetensatzes 6 und kann über eine vierte Kupplung 21 mit einer siebten Welle 22 gekoppelt werden, die mit einem Hohlrad des ersten Planetensatzes in Verbindung steht. Ferner verbindet eine Abtriebswelle 23 neben eine mögliche Ankoppelung über die dritte Kupplung 12 an die vierte Welle 15 einen Steg des vierten Planetensatzes 7 mit einem Steg des ersten Planetensatzes 4.

Dabei ist der Aufbau gemäß der zweiten Ausführungsform nach Fig. 3 wirkungsgleich zu dem der vorherigen Ausführungsform gemäß Fig. 1, so dass in den einzelnen Übersetzungsverhältnissen bei gleichen Standübersetzungen der Planetensätze 4 bis 7 die Übersetzungen i, sowie die Gangsprünge ϕ gemäß dem beispielhaften Schaltschema aus Fig. 2 erreicht werden. Auch die Schaltung der einzelnen Übersetzungsverhältnisse unterscheidet sich zu der Beschreibung zu Fig. 2 nur dahingehend, dass anstelle der vierten Kupplung 13 in Fig. 1 die vierte Kupplung 21 in Fig. 3 jeweils zu betätigen ist.

In Fig. 4 ist eine weitere, dritte bevorzugte Ausführungsform eines erfindungsgemäßen Mehrstufengetriebes dargestellt. Im Unterschied zu der Ausgestaltung der Erfindung nach Fig. 1 ist eine Abtriebswelle 23 neben einer Verbindung mit dem Steg des vierten Planetensatzes 7 und einer möglichen Ankoppelung an die vierte Welle 15 mittels der dritten Kupplung 12 mit dem Steg des ersten Planetensatzes 4 gekoppelt. Des Weiteren kann eine fünfte Welle 24 zusätzlich über eine vierte Kupplung 25 mit einer siebten Welle 26 verbunden werden, die mit dem Sonnenrad des ersten Planetensatzes 4 gekoppelt ist.

Auch die Ausgestaltung gemäß Fig. 4 stellt eine wirkungsgleiche Getriebevariante zu der Ausführungsform nach Fig. 1 dar. Aufgrund dieser Tatsache werden erneut die in Fig. 2 angegebenen Übersetzungen i, sowie die Gangsprünge ϕ ebenfalls erzielt. Auch ein Schalten der einzelnen Übersetzungsverhältnisse durch Betätigen der Schaltelemente entspricht dem Beschriebenen zu Fig. 2, wobei anstelle der vierten Kupplung 13 in Fig. 1 jeweils die vierte Kupplung 25 in Fig. 4 zu betätigen ist.

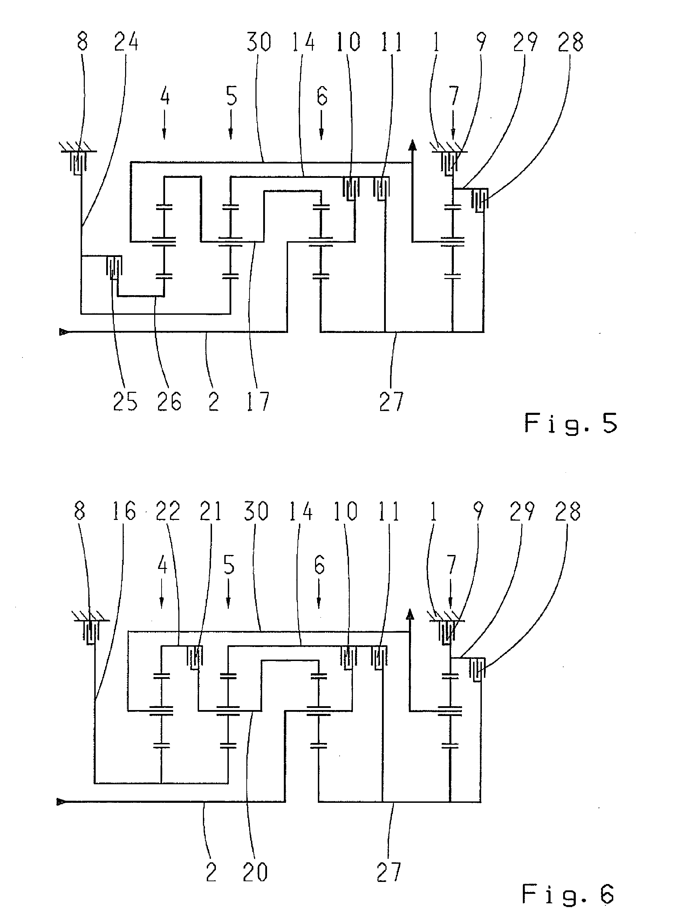

Ferner geht aus Fig. 5 eine weitere, vierte Ausführungsform eines erfindungsgemäßen Mehrstufengetriebes hervor. Als Unterschied zu der Ausgestaltung nach Fig. 1 kann eine vierte Welle 27, neben einer Verbindung mit einem Sonnenrad des dritten Planetensatzes 6, einem Sonnenrad des vierten Planetensatzes 7 und einer möglichen Koppelung mit der dritten Welle 14 über die zweite Kupplung 11, mittels einer dritten Kupplung 28 mit einer achten Welle 29 gekoppelt werden. Diese achte Welle 29 steht mit einem Hohlrad des vierten Planetensatzes 7 in Verbindung und kann über die zweite Bremse 9 am Gehäuse 1 festgesetzt werden. Des Weiteren ist, wie auch schon bei der Variante nach Fig. 4, eine fünfte Welle 24 mittels einer vierten Kupplung 25 mit einer siebten Welle 26 lösbar verbindbar, die mit dem Sonnenrad des ersten Planetensatzes 4 gekoppelt ist. Schließlich verbindet eine Abtriebswelle 30 den Steg des ersten Planetensatzes 4 mit dem Steg des vierten Planetensatzes 7, wobei ein Abtrieb quer zu dem Antrieb über die Antriebswelle 2 erfolgt. Folglich ist das Mehrstufengetriebe nach Fig. 5 in Front-Querbauweise ausgeführt.

Die Ausgestaltung gemäß Fig. 5 stellt ebenfalls wieder eine wirkungsgleiche Ausführung eines Mehrstufengetriebes zu der Variante nach Fig. 1 dar. Folglich ist das Getriebeschemata nach Fig. 2 auch wiederum für die Fig. 5 heranzuziehen, wobei bei der Schaltung der Übersetzungsverhältnisse die Beschreibung zu Fig. 2 dahingehend abzuwandeln ist, dass anstelle der dritten Kupplung 12 in Fig. 1 jeweils die dritte Kupplung 28 in Fig. 5 und anstelle der vierten Kupplung 13 in Fig. 1 jeweils die vierte Kupplung 25 in Fig. 5 zu bestätigen ist.

Ferner geht aus der Fig. 6 eine weitere, fünfte Ausgestaltung eines erfindungsgemäßen Mehrstufengetriebes hervor. Unterschiedlich zu der Ausgestaltung gemäß Fig. 1 ist hierbei, dass eine vierte Welle 27, wie auch schon bei der vorgehenden Variante nach Fig. 5, mittels einer dritten Kupplung 28 mit einer achten Welle 29 verbunden werden kann, die mit dem Hohlrad des vierten Planetensatzes 7 gekoppelt und über die zweite Bremse 9 am Gehäuse 1 festsetzbar ist. Des Weiteren verbindet erneut eine Abtriebswelle 30 den Steg des ersten Planetensatzes 4 mit dem Steg des vierten Planetensatzes 7, wobei ein Abtrieb quer zum Antrieb über die Antriebswelle 2 erfolgt. Ferner kann eine sechste Welle 20, neben einer Ankoppelung an das Hohlrad des dritten Planetensatzes 6 und an den Steg des zweiten Planetensatzes 5, mittels einer vierten Kupplung 21 mit einer siebten Welle 22 gekoppelt werden, die mit dem Hohlrad des ersten Planetensatzes 4 in Verbindung steht.

Das beispielhafte Schaltschema gemäß Fig. 2 ist hierbei auch wiederum auf die Ausgestaltung gemäß Fig. 6 hinsichtlich der Schaltung und der erreichbaren Übersetzungen i sowie der Gangsprünge ϕ heranzuziehen, wobei bezüglich der Schaltung der Übersetzungsverhältnisse das Schaltschema dahingehend abzuwandeln ist, dass anstelle der dritten Kupplung 12 in Fig. 1 jeweils die dritte Kupplung 28 in Fig. 6 und anstelle der vierten Kupplung 13 in Fig. 1 jeweils die vierte Kupplung 21 in Fig. 6 zu betätigen ist.

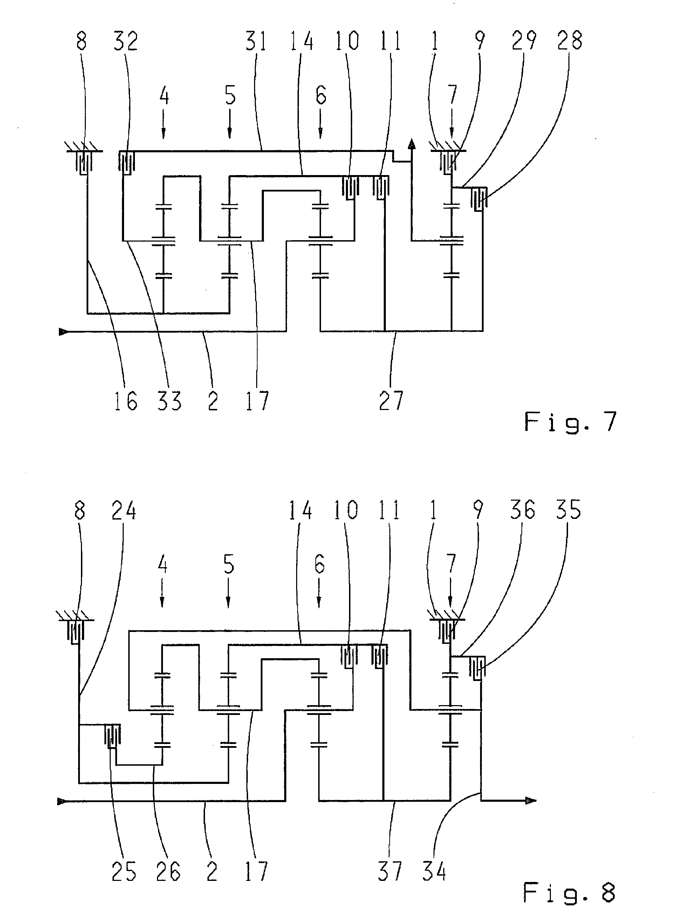

In Fig. 7 ist eine sechste bevorzugte Ausführungsform eines erfindungsgemäßen Mehrstufengetriebes dargestellt. Im Unterschied zu der Ausgestaltung nach Fig. 1 und in Übereinstimmung mit den Fig. 5 und 6 kann eine vierte Welle 27 mittels einer dritten Kupplung 28 mit einer achten Welle 29 gekoppelt werden, die mit dem Hohlrad des vierten Planetensatzes 7 verbunden und über die zweite Bremse 9 am Gehäuse 1 festsetzbar ist. Weiterhin unterschiedlich zu der Ausgestaltung nach Fig. 1 ist eine Abtriebswelle 31 neben einer Verbindung mit dem Steg des vierten Planetensatzes 7 über eine vierte Kupplung 32 mit einer siebten Welle 33 koppelbar, die mit dem Steg des ersten Planetensatzes 4 in Verbindung steht.

Auch im Falle der Variante nach Fig. 7 kann wiederum das beispielhafte Schaltschema nach Fig. 2 bezüglich der darstellbaren Übersetzungen i und der Gangsprünge ϕ, sowie einer Schaltung der Übersetzungsverhältnisse herangezogen werden, wobei hierzu das beispielhafte Schaltschema gemäß Fig. 2 dahingehend abzuwandeln ist, dass anstelle der dritten Kupplung 12 in Fig. 1 jeweils die dritte Kupplung 28 in Fig. 7 und anstelle der vierten Kupplung 13 in Fig. 1 jeweils die vierte Kupplung 32 in Fig. 7 zu bestätigen ist.

Des Weiteren ist in Fig. 8 eine siebte Ausgestaltung eines erfindungsgemäßen Mehrstufengetriebes dargestellt, welches sich von der Ausführungsform gemäß Fig. 1 dahingehend unterscheidet, dass eine fünfte Welle 24, wie schon bei den Varianten nach Fig. 4 und Fig. 5, mittels einer vierten Kupplung 25 mit einer siebten Welle 26 verbunden werden kann, welche mit dem Sonnenrad des ersten Planetensatzes 4 gekoppelt ist. Zudem ist eine Abtriebswelle 34 neben einer Verbindung mit dem Steg des ersten Planetensatzes 4 und dem Steg des vierten Planetensatzes 7 über eine dritte Kupplung 35 mit einer achten Welle 36 lösbar verbindbar, die wiederum mit dem Hohlrad des vierten Planetensatzes 7 verbunden und über die zweite Bremse 9 am Gehäuse 1 festsetzbar ist. Schließlich ist eine vierte Welle 37 lediglich über die zweite Kupplung 11 mit der dritten Welle 14 koppelbar und verbindet das Sonnenrad des dritten Planetensatzes 6 mit dem Sonnenrad des vierten Planetensatzes 7.

Bezüglich einer Schaltung von Übersetzungsverhältnissen des Mehrstufengetriebes gemäß Fig. 8 ist das beispielhafte Schaltschema nach Fig. 2 dahingehend abzuwandeln, dass anstelle der dritten Kupplung 12 in Fig. 1 jeweils die dritte Kupplung 35 in Fig. 8 und anstelle der vierten Kupplung 13 in Fig. 1 jeweils die vierte Kupplung 25 in Fig. 8 zu betätigen ist. Die erreichbaren Übersetzungen i und die Gangsprünge ϕ entsprechen dabei bei den entsprechenden Standübersetzungen der Planetensätze 4 bis 7 erneut den ablesbaren Werten aus Fig. 2.

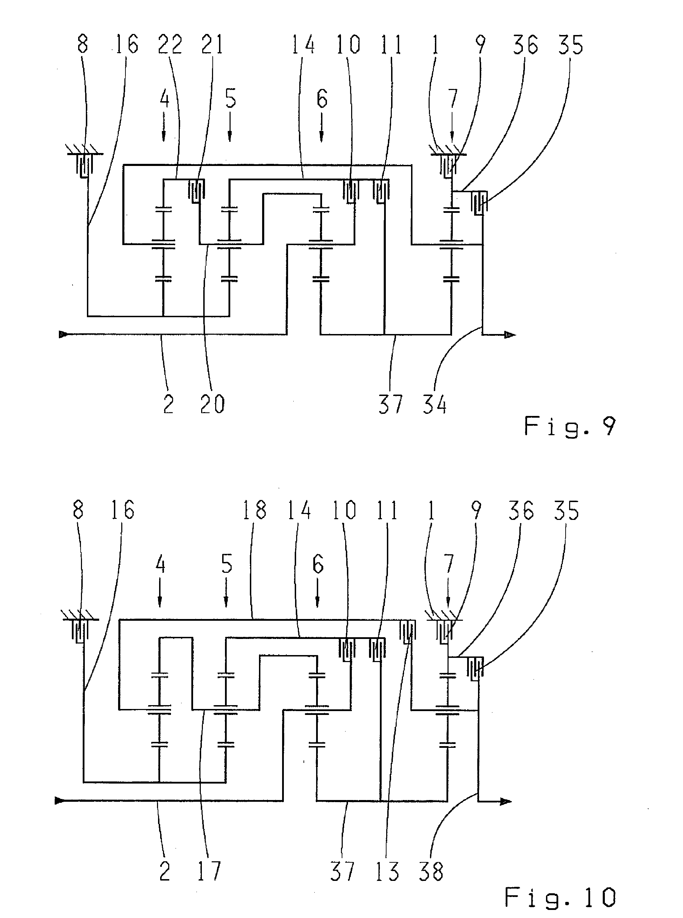

Eine weitere, achte bevorzugte Ausführungsform eines erfindungsgemäßen Mehrstufengetriebes geht aus Fig. 9 hervor. Im Unterschied zu der Ausgestaltung gemäß Fig. 1 ist hierbei eine sechste Welle 20 neben einer Verbindung mit dem Steg des zweiten Planetensatzes 5 und dem Hohlrad des dritten Planetensatzes 6 über eine vierte Kupplung 21 mit einer siebten Welle 22 verbindbar, die mit dem Hohlrad des ersten Planetensatzes 4 in Verbindung steht.

Des Weiteren ist, wie auch schon bei der vorhergehenden Variante, eine Abtriebswelle 34 neben einer Kopplung mit dem Steg des ersten Planetensatzes 4 und dem Steg des vierten Planetensatzes 7 mittels einer dritten Kupplung 35 mit einer achten Welle 36 lösbar verbindbar. Diese achte Welle 36 ist im weiteren Verlauf mit dem Hohlrad des vierten Planetensatzes 7 gekoppelt und kann über die zweite Bremse 9 am Gehäuse 1 festgesetzt werden. Schließlich ist eine vierte Welle 37 lediglich mit den Sonnenrädern des dritten Planetensatzes 6 und des vierten Planetensatzes 7 verbunden, sowie mittels der zweiten Kupplung 11 mit der dritten Welle 14 koppelbar.

Bezüglich der darstellbaren Übersetzungen i, sowie der Gangsprünge ϕ zwischen den einzelnen Übersetzungsverhältnissen entspricht auch die Variante nach Fig. 9 der Ausgestaltung nach Fig. 1. Bezüglich einer Schaltung der einzelnen Übersetzungsverhältnisse ist lediglich anstelle der dritten Kupplung 12 aus Fig. 1 jeweils die dritte Kupplung 35 aus Fig. 9 und anstelle der vierten Kupplung 13 in Fig. 1 jeweils die vierte Kupplung 21 in Fig. 9 zu betätigen.

Ferner geht aus Fig. 10 eine weitere, neunte bevorzugte Ausführungsform eines erfindungsgemäßen Mehrstufengetriebes hervor. Unterschiedlich zu der Variante gemäß Fig. 1 ist hierbei, dass eine Abtriebswelle 38, neben einer Verbindung mit dem Steg des vierten Planetensatzes 7 und einer möglichen Koppelung mittels der vierten Kupplung 13 mit der siebten Welle 18, über eine dritte Kupplung 35 mit einer achten Welle 36 lösbar verbindbar ist. Diese achte Welle 36 ist, wie schon beispielsweise bei der vorhergehenden Variante nach Fig. 9, erneut mit dem Hohlrad des vierten Planetensatzes 7 gekoppelt und kann über die zweite Bremse 9 am Gehäuse 1 festgesetzt werden. Zudem ist auch wieder eine vierte Welle 37 lediglich mit den Sonnenrädern des dritten Planetensatzes 6 und des vierten Planetensatzes 7, sowie mit zweiten Kupplung 11 verbunden.

Bezüglich einer Schaltung von Übersetzungsverhältnissen der Getriebevariante gemäß Fig. 10 ist das beispielhafte Schaltschema nach Fig. 2 dahingehend abzuwandeln, dass anstelle der dritten Kupplung 12 in Fig. 1 jeweils die dritte Kupplung 35 in Fig. 10 zu bestätigen ist. Auch die neunte bevorzugte Ausführungsform stellt eine wirkungsgleiche Variante zur Ausgestaltung gemäß Fig. 1 dar.

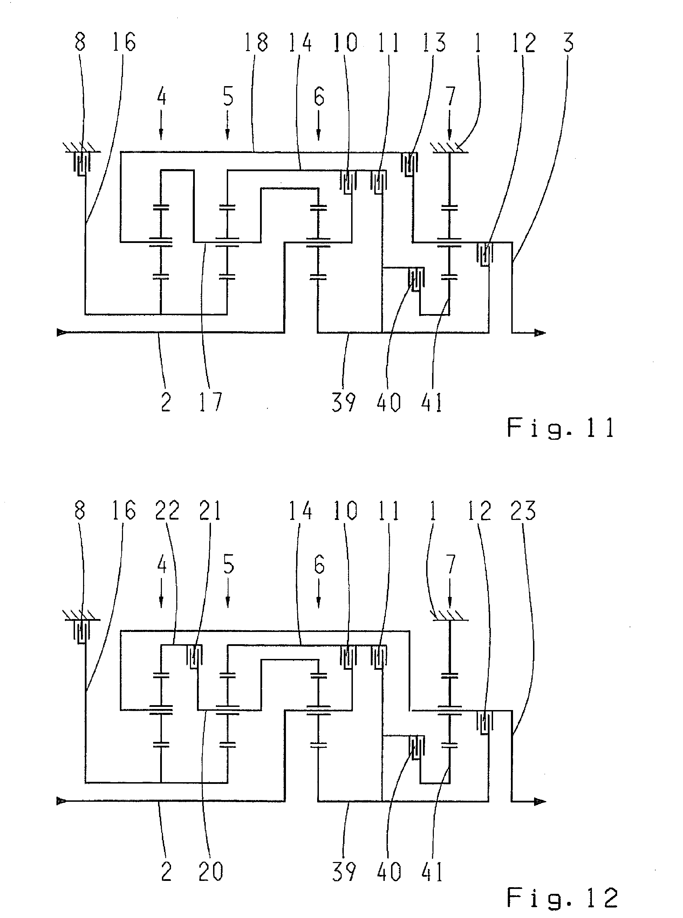

Eine weitere, zehnte bevorzugte Ausführungsform eines Mehrstufengetriebes ist aus Fig. 11 ersichtlich. Unterschiedlich zu der Variante gemäß Fig. 1 ist hierbei, dass eine vierte Welle 39 zusätzlich über eine fünfte Kupplung 40 mit einer achten Welle 41 verbunden werden kann, die mit dem Sonnenrad des vierten Planetensatzes 7 in Verbindung steht. Zudem ist das Hohlrad des vierten Planetensatzes 7 drehfest mit dem Gehäuse 1 verbunden.

Eine Schaltung von Übersetzungsverhältnissen des Mehrstufengetriebes nach Fig. 11 erfolgt dabei entsprechend dem beispielhaften Schaltschema gemäß Fig. 2, wobei anstelle der zweiten Bremse 9 in Fig. 1 jeweils die fünfte Kupplung 40 in Fig. 11 zu schließen ist. Auch die zehnte Ausführungsform eines Mehrstufengetriebes stellt wiederum eine wirkungsgleiche Variante zu der Ausführungsform gemäß Fig. 1 dar.

Des Weiteren geht aus Fig. 12 eine weitere, elfte bevorzugte Ausführungsform eines Mehrstufengetriebes hervor. Dabei unterscheidet sich diese Variante von der Ausgestaltung nach Fig. 1 dahingehend, dass eine Abtriebswelle 23 den Steg des ersten Planetensatzes 4 mit dem Steg des vierten Planetensatzes 7 verbindet. Des Weiteren kann eine sechste Welle 20 neben einer Verbindung mit dem Steg des zweiten Planetensatzes 5 und dem Hohlrad des dritten Planetensatzes 6 mittels einer vierten Kupplung 21 mit einer siebten Welle 22 gekoppelt werden, die mit dem Hohlrad des ersten Planetensatzes 4 in Verbindung steht. Ferner ist erneut eine vierte Welle 39 zusätzlich mittels einer fünften Kupplung 40 mit einer achten Welle 41 lösbar verbindbar, die mit dem Sonnenrad des vierten Planetensatzes 7 gekoppelt ist. Schließlich ist noch das Hohlrad des vierten Planetensatzes 7 drehfest mit dem Gehäuse 1 verbunden.

Auch die Variante gemäß Fig. 12 stellt eine wirkungsgleiche Ausführungsform zu der Ausgestaltung gemäß Fig. 1 dar, wobei das beispielhafte Schaltschema gemäß Fig. 2 bezüglich des Schaltens der Übersetzungsverhältnisse dahingehend abzuändern ist, dass anstelle der vierten Kupplung 13 in Fig. 1 jeweils die vierte Kupplung 21 in Fig. 12 und anstelle der zweiten Bremse 9 in Fig. 1 jeweils die fünfte Kupplung 40 in Fig. 12 zu bestätigen ist.

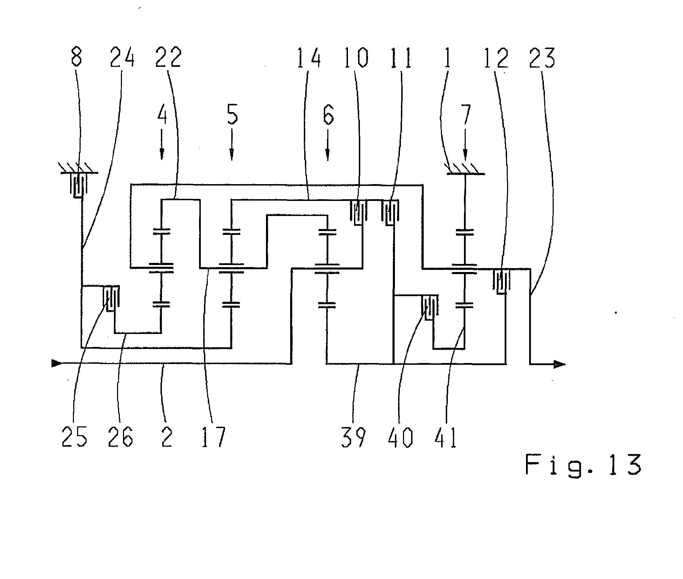

Schließlich geht noch aus Fig. 13 eine letzte, zwölfte bevorzugte Ausführungsform eines erfindungsgemäßen Mehrstufengetriebes hervor. Auch in diesem Fall verbindet eine Abtriebswelle 23 im Unterschied zu der Ausgestaltung nach Fig. 1 den Steg des ersten Planetensatzes 4 mit dem Steg des vierten Planetensatzes 7. Ferner ist auch eine vierte Welle 39 zusätzlich über fünfte Kupplung 40 mit einer achten Welle 41 lösbar verbindbar, die mit dem Sonnenrad des vierten Planetensatzes 7 in Verbindung steht, während das Hohlrad des vierten Planetensatzes 7 drehfest mit dem Gehäuse 1 gekoppelt ist. Schließlich kann noch eine fünfte Welle 24 über eine vierte Kupplung 25 mit einer siebten Welle 26 verbunden werden. Im weiteren Verlauf steht diese siebte Welle 26 mit dem Sonnenrad des ersten Planetensatzes 4 in Verbindung.

Auch die letzte, zwölfte Ausführungsform eines Mehrstufengetriebes stellt eine wirkungsgleiche Variante des Getriebes gemäß Fig. 1 dar. Hierbei ist das Schaltschema nach Fig. 2 dahingehend abzuwandeln, dass anstelle der vierten Kupplung 13 in Fig. 1 jeweils die vierte Kupplung 25 in Fig. 13 und anstelle der zweiten Bremse 9 in Fig. 1 jeweils die fünfte Kupplung 40 in Fig. 13 zu betätigen ist.

Mittels der einzelnen erfindungsgemäßen Ausgestaltungen eines Mehrstufengetriebes lässt sich ein Splittergetriebe für ein Arbeitsfahrzeug mit einem niedrigen Herstellungsaufwand und geringem Gewicht erzielen. Zudem treten bei den erfindungsgemäßen Mehrstufengetrieben jeweils niedrige Absolut- und Relativdrehzahlen, sowie niedrige Planetensatz- und Schaltelementmomente auf. Schließlich werden jeweils eine gute Übersetzungsreihe und gute Verzahnungswirkungsgrade bei gleichzeitig nahezu geometrischen Stufensprüngen erzielt.

Dabei sind die erfindungsgemäßen Mehrstufengetriebe bevorzugt koaxial aufgebaut, der Abtrieb kann aber auch, wie im Falle der Ausführungen gemäß Fig. 5, Fig. 6 und Fig. 7 seitlich zum Getriebe (achsparallel) realisiert werden.

Gemäß der Erfindung ist es zudem denkbar, einzelne Schaltelemente entweder weg zu lassen oder durch eine starre Verbindung zu ersetzen, wodurch sich jeweils ein Mehrstufengetriebe mit einer reduzierten Anzahl an darstellbaren Übersetzungsverhältnissen ergibt. Bevorzugt wäre im Falle der Ausgestaltung nach Fig. 1 ein Weglassen der dritten Kupplung 12 oder der zweiten Bremse 9 vorzunehmen, was jeweils in einem Mehrstufengetriebe mit einer geringeren Anzahl an darstellbaren Gängen resultieren würde. Eine weitere bevorzugte Ausgestaltung mit reduzierter Ganganzahl ergibt sich durch den Ersatz der ersten Bremse 8 durch eine starre Verbindung zwischen der fünften Welle (16; 24) mit dem Gehäuse 1.

Erfindungsgemäß ist es zudem möglich, an jeder geeigneten Stelle des Mehrstufengetriebes zusätzliche Freiläufe vorzusehen, beispielsweise zwischen einer Welle und dem Gehäuse, oder um zwei Wellen gegebenenfalls zu verbinden. Des Weiteren können der Abtrieb prinzipiell überall an der jeweiligen Abtriebswelle und der Antrieb prinzipiell auch überall an der jeweiligen Antriebswelle angeordnet sein.

Im Rahmen einer vorteilhaften Weiterbildung kann die jeweilige Antriebswelle durch ein Kupplungselement von einem Antriebsmotor nach Bedarf getrennt werden, wobei als Kupplungselement ein hydrodynamischer Drehmomentwandler, eine hydrodynamische Kupplung, eine trockene Anfahrkupplung, eine nasse Anfahrkupplung, eine Magnetpulverkupplung, eine Fliehkraftkupplung, etc. einsetzbar sind. Zudem ist es auch möglich, ein derartiges Anfahrelement in Kraftflussrichtung hinter dem Getriebe anzuordnen, wobei in diesem Fall die jeweilige Antriebswelle ständig mit der Kurbelwelle des Antriebsmotors verbunden ist. Alternativ kann auch eines der Schaltelemente des Mehrstufengetriebes als internes Anfahrelement genutzt werden. Dieses interne Anfahrelement sollte in den potentiellen Anfahrgängen vorzugsweise geschlossen sein, d. h. es wird während des Anfahrvorgangs geschlossen.

Zudem ist es möglich zwischen dem Antriebsmotor und dem Getriebe einen Torsionsschwingungsdämfper anzuordnen.

Schließlich ist es im Rahmen der Erfindung ebenso denkbar, auf jeder der Wellen, bevorzugt auf der jeweiligen Antriebswelle oder der jeweiligen Abtriebswelle eine elektrische Maschine als Generator und/oder als zusätzliche Antriebsmaschine anzuordnen. Selbstverständlich fällt auch jede konstruktive Ausbildung, insbesondere jede räumlich Anordnung der Planetensätze und der Schaltelemente an sich sowie zueinander und soweit technisch sinnvoll, unter den Schutzumfang der vorliegenden Ansprüche, ohne die Funktion des Getriebes, wie sie in den Ansprüchen angegeben ist, zu beeinflussen, auch wenn diese Ausbildung nicht explizit in den Figuren oder in der Beschreibung dargestellt ist.

### Bezugszeichen

- 1: Gehäuse
- 2: Antriebswelle
- 3: Abtriebswelle
- 4: erster Planetensatz
- 5: zweiter Planetensatz
- 6: dritter Planetensatz
- 7: vierter Planetensatz
- 8: erste Bremse
- 9: zweite Bremse
- 10: erste Kupplung
- 11: zweite Kupplung
- 12: dritte Kupplung
- 13: vierte Kupplung
- 14: dritte Welle
- 15: vierte Welle
- 16: fünfte Welle
- 17: sechste Welle
- 18: siebte Welle
- 19: achte Welle
- 20: sechste Welle
- 21: vierte Kupplung
- 22: siebte Welle
- 23: Abtriebswelle
- 24: fünfte Welle
- 25: vierte Kupplung
- 26: siebte Welle
- 27: vierte Welle
- 28: dritte Kupplung
- 29: achte Welle
- 30: Abtriebswelle
- 31: Abtriebswelle
- 32: vierte Kupplung
- 33: siebte Welle
- 34: Abtriebswelle
- 35: dritte Kupplung
- 36: achte Welle
- 37: vierte Welle
- 38: Abtriebswelle
- 39: vierte Welle
- 40: fünfte Kupplung
- 41: achte Welle

## Patentansprüche

1. Mehrstufengetriebe in Planetenbauweise, insbesondere Splittergetriebe einer Arbeitsmaschine, mit einem Gehäuse (1), in welchem vier Planetensätze (4, 5, 6, 7) und mehrere Wellen aufgenommen sind, und mit Schaltelementen, welche durch mindestens eine Bremse (8; 8, 9) und Kupplungen gebildet sind und mittels deren gezielter Betätigung verschiedene Übersetzungsverhältnisse zwischen einer Antriebs- (2) und einer Abtriebswelle (3; 23; 30; 31; 34; 38; 41) darstellbar sind, **dadurch gekennzeichnet, dass** die Antriebswelle (2) mit einem Steg eines dritten Planetensatzes (6) verbunden und über eine erste Kupplung (10) mit einer dritten Welle (14) koppelbar ist, welche mit einem Hohlrad eines zweiten Planetensatzes (5) gekoppelt und mittels einer zweiten Kupplung (11) mit einer vierten Welle (15; 27; 37; 39) lösbar verbindbar ist, die mit einem Sonnenrad des dritten Planetensatzes (6) in Verbindung steht, wobei eine fünfte Welle (16; 24) mit einem Sonnenrad des zweiten Planetensatzes (5) gekoppelt und mittels einer ersten Bremse (8) am Gehäuse (1) festsetzbar ist, wobei ferner eine sechste Welle (17; 20) ein Hohlrad des dritten Planetensatzes (6) mit einem Steg des zweiten Planetensatzes (5) verbindet, und wobei die Abtriebswelle (3; 23; 30; 31; 34; 38; 41) mit einem Steg eines vierten Planetensatzes (7) gekoppelt ist.

2. Mehrstufengetriebe nach Anspruch 1, **dadurch gekennzeichnet, dass** die vierte Welle (15) zudem mit einem Sonnenrad des vierten Planetensatzes (7) gekoppelt und mittels einer dritten Kupplung (12) mit der Abtriebswelle (3) verbindbar ist, wobei die Abtriebswelle (3) über eine vierte Kupplung (13) mit einer siebten Welle (18) koppelbar ist, die mit einem Steg eines ersten Planetensatzes (4) verbunden ist, wobei ein Sonnenrad des ersten Planetensatzes (4) mit der fünften Welle (16) und ein Hohlrad des ersten Planetensatzes (4) mit der sechsten Welle (17) gekoppelt ist, und wobei ein Hohlrad des vierten Planetensatzes (7) mit einer achten Welle (19) verbunden ist, die mittels einer zweiten Bremse (9) am Gehäuse (1) festsetzbar ist.

3. Mehrstufengetriebe nach Anspruch 1, **dadurch gekennzeichnet, dass** die vierte Welle (15) zudem mit einem Sonnenrad des vierten Planetensatzes (7) gekoppelt und mittels einer dritten Kupplung (12) mit der Abtriebswelle (23) verbindbar ist, wobei die sechste Welle (20) über eine vierte Kupplung (21) mit einer siebten Welle (22) koppelbar ist, die mit einem Hohlrad eines ersten Planetensatzes (4) in Verbindung steht, wobei ein Sonnenrad des ersten Planetensatzes (4) mit der fünften Welle (16) und ein Steg des ersten Planetensatzes (4) mit der Abtriebswelle (23) gekoppelt ist, und wobei ein Hohlrad des vierten Planetensatzes (7) mit einer achten Welle (19) verbunden ist, die mittels einer zweiten Bremse (9) am Gehäuse (1) festsetzbar ist.

4. Mehrstufengetriebe nach Anspruch 1, **dadurch gekennzeichnet, dass** die vierte Welle (15) zudem mit einem Sonnenrad des vierten Planetensatzes (7) gekoppelt und mittels einer dritten Kupplung (12) mit der Abtriebswelle (23) verbindbar ist, wobei die fünfte Welle (24) über eine vierte Kupplung (25) mit einer siebten Welle (26) koppelbar ist, die mit einem Sonnenrad eines ersten Planetensatzes (4) in Verbindung steht, wobei ein Steg des ersten Planetensatzes (4) mit der Abtriebswelle (23) und ein Hohlrad des ersten Planetensatzes (4) mit der sechsten Welle (17) gekoppelt ist, und wobei ein Hohlrad des vierten Planetensatzes (7) mit einer achten Welle (19) verbunden ist, die mittels einer zweiten Bremse (9) am Gehäuse (1) festsetzbar ist.

5. Mehrstufengetriebe nach Anspruch 1, **dadurch gekennzeichnet, dass** die vierte Welle (27) zudem mit einem Sonnenrad des vierten Planetensatzes (7) gekoppelt und mittels einer dritten Kupplung (28) mit einer achten Welle (29) verbindbar ist, die mit einem Hohlrad des vierten Planetensatzes (7) gekoppelt und über eine zweite Bremse (9) am Gehäuse (1) festsetzbar ist, wobei die fünfte Welle (24) mittels einer vierten Kupplung (25) mit einer siebten Welle (26) koppelbar ist, welche mit einem Sonnenrad eines ersten Planetensatzes (4) in Verbindung steht, und wobei ein Steg des ersten Planetensatzes (4) mit der Abtriebswelle (30) und ein Hohlrad des ersten Planetensatzes (4) mit der sechsten Welle (17) verbunden ist.

6. Mehrstufengetriebe nach Anspruch 1, **dadurch gekennzeichnet, dass** die vierte Welle (27) zudem mit einem Sonnenrad des vierten Planetensatzes (7) gekoppelt und mittels einer dritten Kupplung (28) mit einer achten Welle (29) verbindbar ist, die mit einem Hohlrad des vierten Planetensatzes (7) gekoppelt und über eine zweite Bremse (9) am Gehäuse (1) festsetzbar ist, wobei die sechste Welle (20) mittels einer vierten Kupplung (21) mit einer siebten Welle (22) koppelbar ist, welche mit einem Hohlrad eines ersten Planetensatzes (4) in Verbindung steht, und wobei ein Steg des ersten Planetensatzes (4) mit der Abtriebswelle (30) und ein Sonnenrad des ersten Planetensatzes (4) mit der fünften Welle (16) verbunden ist.

7. Mehrstufengetriebe nach Anspruch 1, **dadurch gekennzeichnet, dass** die vierte Welle (27) zudem mit einem Sonnenrad des vierten Planetensatzes (7) gekoppelt und mittels einer dritten Kupplung (28) mit einer achten Welle (29) verbindbar ist, die mit einem Hohlrad des vierten Planetensatzes (7) gekoppelt und über eine zweite Bremse (9) am Gehäuse (1) festsetzbar ist, wobei die Abtriebswelle (31) mittels einer vierten Kupplung (32) mit einer siebten Welle (33) koppelbar ist, welche mit einem Steg eines ersten Planetensatzes (4) in Verbindung steht, und wobei ein Sonnenrad des ersten Planetensatzes (4) mit der fünften Welle (16) und ein Hohlrad des ersten Planetensatzes (4) mit der sechsten Welle (17) verbunden ist.

8. Mehrstufengetriebe nach Anspruch 1, **dadurch gekennzeichnet, dass** die Abtriebswelle (34) mittels einer dritten Kupplung (35) mit einer achten Welle (36) verbindbar ist, welche mit einem Hohlrad des vierten Planetensatzes (7) gekoppelt und über eine zweite Bremse (9) am Gehäuse (1) festsetzbar ist, wobei die vierte Welle (37) mit einem Sonnenrad des vierten Planetensatzes (7) in Verbindung steht und die fünfte Welle (24) über eine vierte Kupplung (25) mit einer siebten Welle (26) koppelbar ist, die mit einem Sonnenrad eines ersten Planetensatzes (4) verbunden ist, und wobei ein Steg des ersten Planetensatzes (4) mit der Abtriebswelle (34) und ein Hohlrad des ersten Planetensatzes (4) mit der sechsten Welle (17) gekoppelt ist.

9. Mehrstufengetriebe nach Anspruch 1, **dadurch gekennzeichnet, dass** die Abtriebswelle (34) mittels einer dritten Kupplung (35) mit einer achten Welle (36) verbindbar ist, welche mit einem Hohlrad des vierten Planetensatzes (7) gekoppelt und über eine zweite Bremse (9) am Gehäuse (1) festsetzbar ist, wobei die vierte Welle (37) mit einem Sonnenrad des vierten Planetensatzes (7) in Verbindung steht und die sechste Welle (20) über eine vierte Kupplung (21) mit einer siebten Welle (22) koppelbar ist, die mit einem Hohlrad eines ersten Planetensatzes (4) verbunden ist, und wobei ein Steg des ersten Planetensatzes (4) mit der Abtriebswelle (34) und ein Sonnenrad des ersten Planetensatzes (4) mit der fünften Welle (16) gekoppelt ist.

10. Mehrstufengetriebe nach Anspruch 1, **dadurch gekennzeichnet, dass** die Abtriebswelle (38) mittels einer dritten Kupplung (35) mit einer achten Welle (36) verbindbar ist, welche mit einem Hohlrad des vierten Planetensatzes (7) gekoppelt und über eine zweite Bremse (9) am Gehäuse (1) festsetzbar ist, wobei die vierte Welle (37) mit einem Sonnenrad des vierten Planetensatzes (7) in Verbindung steht und die Abtriebswelle (38) über eine vierte Kupplung (13) mit einer siebten Welle (18) koppelbar ist, die mit einem Steg eines ersten Planetensatzes (4) verbunden ist, und wobei ein Hohlrad des ersten Planetensatzes (4) mit der sechsten Welle (17) und ein Sonnenrad des ersten Planetensatzes (4) mit der fünften Welle (16) gekoppelt ist.

11. Mehrstufengetriebe nach einem der Ansprüche 2 bis 10, **dadurch gekennzeichnet, dass** sich ein erstes Übersetzungsverhältnis durch Schließen der zweiten Bremse (9), sowie der ersten (10) und zweiten Kupplung (11), ein zweites Übersetzungsverhältnis durch Betätigen beider Bremsen (8, 9), sowie der zweiten Kupplung (11), ein drittes Übersetzungsverhältnis durch Schließen beider Bremsen (8, 9), sowie der ersten Kupplung (10), ein viertes Übersetzungsverhältnis durch Betätigen beider Bremsen (8, 9), sowie der vierten Kupplung (13; 21; 25; 32), ein fünftes Übersetzungsverhältnis durch Schließen der ersten Bremse (8), sowie der ersten (10) und vierten Kupplung (13; 21; 25; 32), ein sechstes Übersetzungsverhältnis durch Betätigen der ersten Bremse (8), sowie der zweiten (11) und vierten Kupplung (13; 21; 25; 32), ein siebtes Übersetzungsverhältnis durch Schließen der ersten Bremse (8), sowie der dritten (12; 28; 35) und vierten Kupplung (13; 21; 25; 32), ein achtes Übersetzungsverhältnis durch Betätigen der zweiten (11), dritten (12; 28; 35) und vierten Kupplung (13; 21; 25; 32) oder durch Schließen der ersten (10), zweiten (11) und vierten Kupplung (13; 21; 25; 32) oder durch Betätigen der ersten (10), zweiten (11) und dritten Kupplung (12; 28; 35) oder durch Schließen der ersten (10), dritten (12; 28; 35) und vierten Kupplung (13; 21; 25; 32), ein neuntes Übersetzungsverhältnis durch Betätigen der ersten Bremse (8), sowie der zweiten (11) und dritten Kupplung (12; 28; 35), und ein zehntes Übersetzungsverhältnis durch Schließen der ersten Bremse (8), sowie der ersten (10) und dritten Kupplung (12; 28; 35) ergibt.

12. Mehrstufengetriebe nach Anspruch 11, **dadurch gekennzeichnet, dass** sich ein erstes zusätzliches Übersetzungsverhältnis durch Schließen der zweiten Bremse (9), sowie der zweiten (11) und vierten Kupplung (13; 21; 25; 32), und ein zweites zusätzliches Übersetzungsverhältnis durch Betätigen der zweiten Bremse (9), sowie der ersten (10) und vierten Kupplung (13; 21; 25; 32) ergibt.

13. Mehrstufengetriebe nach Anspruch 1, **dadurch gekennzeichnet, dass** die Abtriebswelle (3) zudem über eine dritte Kupplung (12) mit der vierten Welle (39) und mittels einer vierten Kupplung (13) mit einer siebten Welle (18) lösbar verbindbar ist, welche mit einem Steg eines ersten Planetensatzes (4) gekoppelt ist, wobei ein Sonnenrad des ersten Planetensatzes (4) mit der fünften Welle (16) und ein Hohlrad des ersten Planetensatzes (4) mit der sechsten Welle (17) verbunden ist, und wobei ein Hohlrad des vierten Planetensatzes (7) starr mit dem Gehäuse (1) gekoppelt und die vierte Welle (39) mittels einer fünften Kupplung (40) mit einer achten Welle (41) verbindbar ist, die mit einem Sonnenrad des vierten Planetensatzes (7) in Verbindung steht.

14. Mehrstufengetriebe nach Anspruch 1, **dadurch gekennzeichnet, dass** die Abtriebswelle (23) zudem über eine dritte Kupplung (12) mit der vierten Welle (39) und die sechste Welle (20) mittels einer vierten Kupplung (21) mit einer siebten Welle (22) lösbar verbindbar ist, welche mit einem Hohlrad eines ersten Planetensatzes (4) gekoppelt ist, wobei ein Steg des ersten Planetensatzes (4) mit der Abtriebswelle (23) und ein Sonnenrad des ersten Planetensatzes (4) mit der fünften Welle (16) in Verbindung steht, und wobei ein Hohlrad des vierten Planetensatzes (7) starr mit dem Gehäuse (1) gekoppelt und die vierte Welle (39) mittels einer fünften Kupplung (40) mit einer achten Welle (41) verbindbar ist, die mit einem Sonnenrad des vierten Planetensatzes (7) in Verbindung steht.

15. Mehrstufengetriebe nach Anspruch 1, **dadurch gekennzeichnet, dass** die Abtriebswelle (23) zudem über eine dritte Kupplung (12) mit der vierten Welle (39) und die fünfte Welle (24) mittels einer vierten Kupplung (25) mit einer siebten Welle (26) lösbar verbindbar ist, die mit einem Sonnenrad eines ersten Planetensatzes (4) gekoppelt ist, wobei ein Steg des ersten Planetensatzes (4) mit der Abtriebswelle (23) und ein Hohlrad des ersten Planetensatzes (4) mit der sechsten Welle (17) in Verbindung steht, und wobei ein Hohlrad des vierten Planetensatzes (7) starr mit dem Gehäuse (1) gekoppelt und die vierte Welle (39) mittels einer fünften Kupplung (40) mit einer achten Welle (41) verbindbar ist, die mit einem Sonnenrad des vierten Planetensatzes (7) in Verbindung steht.

16. Mehrstufengetriebe nach einem der Ansprüche 13 bis 15, **dadurch gekennzeichnet, dass** sich ein erstes Übersetzungsverhältnis durch Schließen der ersten (10), zweiten (11) und fünften Kupplung (40), ein zweites Übersetzungsverhältnis durch Betätigen der ersten Bremse (8), sowie der zweiten (11) und fünften Kupplung (40), ein drittes Übersetzungsverhältnis durch Schließen der ersten Bremse (8), sowie der ersten (10) und fünften Kupplung (40), ein viertes Übersetzungsverhältnis durch Betätigen der ersten Bremse (8), sowie der vierten (13; 21; 25) und fünften Kupplung (40), ein fünftes Übersetzungsverhältnis durch Schließen der ersten Bremse (8), sowie der ersten (10) und vierten Kupplung (13; 21; 25), ein sechstes Übersetzungsverhältnis durch Betätigen der ersten Bremse (8), sowie der zweiten (11) und vierten Kupplung (13; 21; 25), ein siebtes Übersetzungsverhältnis durch Schließen der ersten Bremse (8), sowie der dritten (12) und vierten Kupplung (13; 21; 25), ein achtes Übersetzungsverhältnis durch Betätigen der zweiten (11), dritten (12) und vierten Kupplung (13; 21; 25) oder durch Schließen der ersten (10), zweiten (11) und vierten Kupplung (13; 21; 25) oder durch Betätigen der ersten (10), zweiten (11) und dritten Kupplung (12) oder durch Schließen der ersten (10), dritten (12) und vierten Kupplung (13; 21; 25), ein neuntes Übersetzungsverhältnis durch Betätigen der ersten Bremse (8), sowie der zweiten (11) und dritten Kupplung (12), und ein zehntes Übersetzungsverhältnis durch Schließen der ersten Bremse (8), sowie der ersten (10) und dritten Kupplung (12) ergibt.

17. Mehrstufengetriebe nach Anspruch 16, **dadurch gekennzeichnet, dass** sich ein erstes zusätzliches Übersetzungsverhältnis durch Schließen der zweiten (11), vierten (13; 21; 25) und fünften Kupplung (40), und ein zweites zusätzliches Übersetzungsverhältnis durch Betätigen der ersten (10), vierten (13; 21; 25) und fünften Kupplung (40) ergibt.

18. Mehrstufengetriebe nach einem der vorhergehenden Ansprüche, **dadurch gekennzeichnet, dass** die Abtriebswelle (3; 23; 30; 31; 34; 38; 41) als Antrieb und die Antriebswelle (2) als Abtrieb des Mehrstufengetriebes dient.

## Claims

1. Multi-stage gearbox of planetary construction, in particular a splitter gear of a working machine, with a housing (1) in which four planet sets (4, 5, 6, 7) and a plurality of shafts are accommodated, and with shift elements which are formed by at least one brake (8; 8, 9) and clutches and by means of the targeted actuation of which various step-up ratios between a drive shaft (2) and an output shaft (3; 23; 30; 31; 34; 38; 41) can be implemented, **characterized in that** that the drive shaft (2) is connected to a web of a third planet set (6) and can be coupled via a first clutch (10) to a third shaft (14) which is coupled to a ring wheel of a second planet set (5) and can be connected releasably by means of a second clutch (11) to a fourth shaft (15; 27; 37; 39) which is connected to a sun wheel of the third planet set (6), a fifth shaft (16; 24) being coupled to a sun wheel of the second planet set (5) and being capable of being locked to the housing (1) by means of a first brake (8), furthermore a sixth shaft (17; 20) connecting a ring wheel of the third planet set (6) to a web of the second planet set (5), and the output shaft (3; 23; 30; 31; 34; 38; 41) being coupled to a web of a fourth planet set (7).

2. Multi-stage gearbox according to Claim 1, **characterized in that**, moreover, the fourth shaft (15) is coupled to a sun wheel of the fourth planet set (7) and can be connected to the output shaft (3) by means of a third clutch (12), the output shaft (3) being coupleable via a fourth clutch (13) to a seventh shaft (18) which is connected to a web of a first planet set (4), a sun wheel of the first planet set (4) being coupled to the fifth shaft (16) and a ring wheel of the first planet set (4) being coupled to the sixth shaft (17), and a ring wheel of the fourth planet set (7) being connected to an eighth shaft (19) which can be locked to the housing (1) by means of a second brake (9).

3. Multi-stage gearbox according to Claim 1, **characterized in that**, moreover, the fourth shaft (15) is coupled to a sun wheel of the fourth planet set (7) and can be connected to the output shaft (23) by means of a third clutch (12), the sixth shaft (20) being coupleable via a fourth clutch (21) to a seventh shaft (22) which is connected to a ring wheel of a first planet set (4), a sun wheel of the first planet set (4) being coupled to the fifth shaft (16) and a web of the first planet set (4) being coupled to the output shaft (23), and a ring wheel of the fourth planet set (7) being connected to an eighth shaft (19) which can be locked to the housing (1) by means of a second brake (9).

4. Multi-stage gearbox according to Claim 1, **characterized in that**, moreover, the fourth shaft (15) is coupled to a sun wheel of the fourth planet set (7) and can be connected to the output shaft (23) by means of a third clutch (12), the fifth shaft (24) being coupleable via a fourth clutch (25) to a seventh shaft (26) which is connected to a sun wheel of a first planet set (4), a web of the first planet set (4) being coupled to the output shaft (23) and a ring wheel of the first planet set (4) being coupled to the sixth shaft (17), and a ring wheel of the fourth planet set (7) being connected to an eighth shaft (19) which can be locked to the housing (1) by means of a second brake (9).

5. Multi-stage gearbox according to Claim 1, **characterized in that**, moreover, the fourth shaft (27) is coupled to a sun wheel of the fourth planet set (7) and can be connected by means of a third clutch (28) to an eighth shaft (29) which is coupled to a ring wheel of the fourth planet set (7) and can be locked to the housing (1) via a second brake (9), the fifth shaft (24) being coupleable by means of a fourth clutch (25) to a seventh shaft (26) which is connected to a sun wheel of a first planet set (4), and a web of the first planet set (4) being connected to the output shaft (30) and a ring wheel of the first planet set (4) being connected to the sixth shaft (17).

6. Multi-stage gearbox according to Claim 1, **characterized in that**, moreover, the fourth shaft (27) is coupled to a sun wheel of the fourth planet set (7) and can be connected by means of a third clutch (28) to an eighth shaft (29) which is coupled to a ring wheel of the fourth planet set (7) and can be locked to the housing (1) via a second brake (9), the sixth shaft (20) being coupleable by means of a fourth clutch (21) to a seventh shaft (22) which is connected to a ring wheel of a first planet set (4), and a web of the first planet set (4) being connected to the output shaft (30) and a sun wheel of the first planet set (4) being connected to the fifth shaft (16).

7. Multi-stage gearbox according to Claim 1, **characterized in that**, moreover, the fourth shaft (27) is coupled to a sun wheel of the fourth planet set (7) and can be connected by means of a third clutch (28) to an eighth shaft (29) which is coupled to a ring wheel of the fourth planet set (7) and can be locked to the housing (1) via a second brake (9), the output shaft (31) being coupleable by means of a fourth clutch (32) to a seventh shaft (33) which is connected to a web of a first planet set (4), and a sun wheel of the first planet set (4) being connected to the fifth shaft (16) and a ring wheel of the first planet set (4) being connected to the sixth shaft (17).

8. Multi-stage gearbox according to Claim 1, **characterized in that** the output shaft (34) can be connected by means of a third clutch (35) to an eighth shaft (36) which is coupled to a ring wheel of the fourth planet set (7) and can be locked to the housing (1) via a second brake (9), the fourth shaft (37) being connected to a sun wheel of the fourth planet set (7) and the fifth shaft (24) being coupleable via a fourth clutch (25) to a seventh shaft (26) which is connected to a sun wheel of a first planet set (4), and a web of the first planet set (4) being coupled to the output shaft (34) and a ring wheel of the first planet set (4) being coupled to the sixth shaft (17).

9. Multi-stage gearbox according to Claim 1, **characterized in that** the output shaft (34) can be connected by means of a third clutch (35) to an eighth shaft (36) which is coupled to a ring wheel of the fourth planet set (7) and can be locked to the housing (1) via a second brake (9), the fourth shaft (37) being connected to a sun wheel of the fourth planet set (7) and the sixth shaft (20) being coupleable via a fourth clutch (21) to a seventh shaft (22) which is connected to a ring wheel of a first planet set (4), and a web of the first planet set (4) being coupled to the output shaft (34) and a sun wheel of the first planet set (4) being coupled to the fifth shaft (16).

10. Multi-stage gearbox according to Claim 1, **characterized in that** the output shaft (38) can be connected by means of a third clutch (35) to an eighth shaft (36) which is coupled to a ring wheel of the fourth planet set (7) and can be locked to the housing (1) via a second brake (9), the fourth shaft (37) being connected to a sun wheel of the fourth planet set (7) and the output shaft (38) being coupleable via a fourth clutch (13) to a seventh shaft (18) which is connected to a web of a first planet set (4), and a ring wheel of the first planet set (4) being coupled to the sixth shaft (17) and a sun wheel of the first planet set (4) being coupled to the fifth shaft (16).

11. Multi-stage gearbox according to one of Claims 2 to 10, **characterized in that** a first step-up ratio is obtained by closing the second brake (9) and the first (10) and the second (11) clutch, a second step-up ratio is obtained by actuating the two brakes (8, 9) and the second clutch (11), a third step-up ratio is obtained by closing the two brakes (8, 9) and the first clutch (10), a fourth step-up ratio is obtained by actuating the two brakes (8, 9) and the fourth clutch (13; 21; 25; 32), a fifth step-up ratio is obtained by closing the first brake (8) and the first (10) and the fourth (13; 21; 25; 32) clutch, a sixth step-up ratio is obtained by actuating the first brake (8) and the second (11) and the fourth (13; 21; 25; 32) clutch, a seventh step-up ratio is obtained by closing the first brake (8) and the third (12; 28; 35) and the fourth (13; 21; 25; 32) clutch, an eighth step-up ratio is obtained by actuating the second (11), the third (12; 28; 35) and the fourth (13; 21; 25; 32) clutch or by closing the first (10), the second (11) and the fourth (13; 21; 25; 32) clutch or by actuating the first (10), the second (11) and the third (12; 28; 35) clutch or by closing the first (10), the third (12; 28; 35) and the fourth (13; 21; 25; 32) clutch, a ninth step-up ratio is obtained by actuating the first brake (8) and the second (11) and the third (12; 28; 35) clutch, and a tenth step-up ratio is obtained by closing the first brake (8) and the first (10) and the third (12; 28; 35) clutch.

12. Multi-stage gearbox according to Claim 11, **characterized in that** a first additional step-up ratio is obtained by closing the second brake (9) and the second (11) and the fourth (13; 21; 25; 32) clutch, and a second additional step-up ratio is obtained by actuating the second brake (9) and the first (10) and the fourth (13; 21; 25; 32) clutch.

13. Multi-stage gearbox according to Claim 1, **characterized in that**, moreover, the output shaft (3) can be connected releasably via a third clutch (12) to the fourth shaft (39) and by means of a fourth clutch (13) to a seventh shaft (18) which is coupled to a web of a first planet set (4), a sun wheel of the first planet set (4) being connected to the fifth shaft (16) and a ring wheel of the first planet set (4) being connected to the sixth shaft (17), and a ring wheel of the fourth planet set (7) being coupled rigidly to the housing (1) and the fourth shaft (39) being connectable by means of a fifth clutch (40) to an eighth shaft (41) which is connected to a sun wheel of the fourth planet set (7).

14. Multi-stage gearbox according to Claim 1, **characterized in that**, moreover, the output shaft (23) can be connected releasably via a third clutch (12) to the fourth shaft (39) and the sixth shaft (20) can be connected releasably by means of a fourth clutch (21) to a seventh shaft (22) which is coupled to a ring wheel of a first planet set (4), a web of the first planet set (4) being connected to the output shaft (23) and a sun wheel of the first planet set (4) being connected to the fifth shaft (16), and a ring wheel of the fourth planet set (7) being coupled rigidly to the housing (1) and the fourth shaft (39) being connectable by means of a fifth clutch (40) to an eighth shaft (41) which is connected to a sun wheel of the fourth planet set (7).

15. Multi-stage gearbox according to Claim 1, **characterized in that**, moreover, the output shaft (23) can be connected releasably via a third clutch (12) to the fourth shaft (39) and the fifth shaft (24) can be connected releasably by means of a fourth clutch (25) to a seventh shaft (26) which is coupled to a sun wheel of a first planet set (4), a web of the first planet set (4) being connected to the output shaft (23) and a ring wheel of the first planet set (4) being connected to the sixth shaft (17), and a ring wheel of the fourth planet set (7) being coupled rigidly to the housing (1) and the fourth shaft (39) being connectable by means of a fifth clutch (40) to an eighth shaft (41) which is connected to a sun wheel of the fourth planet set (7).

16. Multi-stage gearbox according to one of Claims 13 to 15, **characterized in that** a first step-up ratio is obtained by closing the first (10), the second (11) and the fifth (40) clutch, a second step-up ratio is obtained by actuating the first brake (8) and the second (11) and the fifth (40) clutch, a third step-up ratio is obtained by closing the first brake (8) and the first (10) and the fifth (40) clutch, a fourth step-up ratio is obtained by actuating the first brake (8) and the fourth (13; 21; 25) and the fifth (40) clutch, a fifth step-up ratio is obtained by closing the first brake (8) and the first (10) and the fourth (13; 21; 25) clutch, a sixth step-up ratio is obtained by actuating the first brake (8) and the second (11) and the fourth (13; 21; 25) clutch, a seventh step-up ratio is obtained by closing the first brake (8) and the third (12) and the fourth (13; 21; 25) clutch, an eighth step-up ratio is obtained by actuating the second (11), the third (12) and the fourth (13; 21; 25) clutch or by closing the first (10), the second (11) and the fourth (13; 21; 25) clutch or by actuating the first (10), the second (11) and the third (12) clutch or by closing the first (10), the third (12) and the fourth (13; 21; 25) clutch, a ninth step-up ratio is obtained by actuating the first brake (8) and the second (11) and the third (12) clutch, and a tenth step-up ratio is obtained by closing the first brake (8) and the first (10) and the third (12) clutch.

17. Multi-stage gearbox according to Claim 16, **characterized in that** a first additional step-up ratio is obtained by closing the second (11), the fourth (13; 21; 25) and the fifth (40) clutch, and a second additional step-up ratio is obtained by actuating the first (10), the fourth (13; 21; 25) and the fifth (40) clutch.

18. Multi-stage gearbox according to one of the preceding claims, **characterized in that** the output shaft (3; 23; 30; 31; 34; 38; 41) serves as a drive and the drive shaft (2) serves as the output of the multi-stage gearbox.

## Revendications

1. Boîte de vitesses multiétagée de construction planétaire, en particulier boîte de vitesses à doubleur de gamme d'une machine de travail, comprenant un boîtier (1) dans lequel sont reçus quatre trains planétaires (4, 5, 6, 7) et plusieurs arbres, et comprenant des éléments de commutation, lesquels sont formés par au moins un frein (8 ; 8, 9) et des embrayages, et par l'actionnement ciblé desquels différents rapports de transmission entre un arbre d'entraînement (2) et un arbre de sortie (3 ; 23 ; 30 ; 31 ; 34 ; 38 ; 41) peuvent être réalisés, **caractérisée en ce que** l'arbre d'entraînement (2) est relié à un porte-satellites d'un troisième train planétaire (6) et peut être accouplé à un troisième arbre (14) par le biais d'un premier embrayage (10), lequel troisième arbre est accouplé à une couronne dentée d'un deuxième train planétaire (5) et peut être relié de manière amovible à un quatrième arbre (15 ; 27 ; 37 ; 39) au moyen d'un deuxième embrayage (11), lequel quatrième arbre est en liaison avec une roue solaire du troisième train planétaire (6), un cinquième arbre (16 ; 24) étant accouplé à une roue solaire du deuxième train planétaire (5) et pouvant être fixé sur le boîtier (1) au moyen d'un premier frein (8), un sixième arbre (17 ; 20) reliant en outre une couronne dentée du troisième train planétaire (6) à un porte-satellites du deuxième train planétaire (5), et l'arbre de sortie (3 ; 23 ; 30 ; 31 ; 34 ; 38 ; 41) étant accouplé à un porte-satellites d'un quatrième train planétaire (7).

2. Boîte de vitesses multiétagée selon la revendication 1, **caractérisée en ce que** le quatrième arbre (15) est de plus accouplé à une roue solaire du quatrième train planétaire (7) et peut être relié à l'arbre de sortie (3) au moyen d'un troisième embrayage (12), l'arbre de sortie (3) pouvant être accouplé à un septième arbre (18) par le biais d'un quatrième embrayage (13), lequel septième arbre est relié à un porte-satellites d'un premier train planétaire (4), une roue solaire du premier train planétaire (4) étant accouplée au cinquième arbre (16) et une couronne dentée du premier train planétaire (4) étant accouplée au sixième arbre (17), et une couronne dentée du quatrième train planétaire (7) étant reliée à un huitième arbre (19), lequel peut être fixé sur le boîtier (1) au moyen d'un deuxième frein (9).

3. Boîte de vitesses multiétagée selon la revendication 1, **caractérisée en ce que** le quatrième arbre (15) est de plus accouplé à une roue solaire du quatrième train planétaire (7) et peut être relié à l'arbre de sortie (23) au moyen d'un troisième embrayage (12), le sixième arbre (20) pouvant être accouplé à un septième arbre (22) par le biais d'un quatrième embrayage (21), lequel septième arbre est en liaison avec une couronne dentée d'un premier train planétaire (4), une roue solaire du premier train planétaire (4) étant accouplée au cinquième arbre (16) et un porte-satellites du premier train planétaire (4) étant accouplé à l'arbre de sortie (23), et une couronne dentée du quatrième train planétaire (7) étant reliée à un huitième arbre (19), lequel peut être fixé sur le boîtier (1) au moyen d'un deuxième frein (9).

4. Boîte de vitesses multiétagée selon la revendication 1, **caractérisée en ce que** le quatrième arbre (15) est de plus accouplé à une roue solaire du quatrième train planétaire (7) et peut être relié à l'arbre de sortie (23) au moyen d'un troisième embrayage (12), le cinquième arbre (24) pouvant être accouplé à un septième arbre (26) par le biais d'un quatrième embrayage (25), lequel septième arbre est en liaison avec une roue solaire d'un premier train planétaire (4), un porte-satellites du premier train planétaire (4) étant accouplé à l'arbre de sortie (23) et une couronne dentée du premier train planétaire (4) étant accouplée au sixième arbre (17), et une couronne dentée du quatrième train planétaire (7) étant reliée à un huitième arbre (19), lequel peut être fixé sur le boîtier (1) au moyen d'un deuxième frein (9).

5. Boîte de vitesses multiétagée selon la revendication 1, **caractérisée en ce que** le quatrième arbre (27) est de plus accouplé à une roue solaire du quatrième train planétaire (7) et peut être relié à un huitième arbre (29) au moyen d'un troisième embrayage (28), lequel huitième arbre est accouplé à une couronne dentée du quatrième train planétaire (7) et peut être fixé sur le boîtier (1) au moyen d'un deuxième frein (9), le cinquième arbre (24) pouvant être accouplé à un septième arbre (26) au moyen d'un quatrième embrayage (25), lequel septième arbre est en liaison avec une roue solaire d'un premier train planétaire (4), et un porte-satellites du premier train planétaire (4) étant relié à l'arbre de sortie (30) et une couronne dentée du premier train planétaire (4) étant reliée au sixième arbre (17).

6. Boîte de vitesses multiétagée selon la revendication 1, **caractérisée en ce que** le quatrième arbre (27) est de plus accouplé à une roue solaire du quatrième train planétaire (7) et peut être relié à un huitième arbre (29) au moyen d'un troisième embrayage (28), lequel huitième arbre est accouplé à une couronne dentée du quatrième train planétaire (7) et peut être fixé sur le boîtier (1) au moyen d'un deuxième frein (9), le sixième arbre (20) pouvant être accouplé à un septième arbre (22) au moyen d'un quatrième embrayage (21), lequel septième arbre est en liaison avec une couronne dentée d'un premier train planétaire (4), et un porte-satellites du premier train planétaire (4) étant relié à l'arbre de sortie (30) et une roue solaire du premier train planétaire (4) étant reliée au cinquième arbre (16).

7. Boîte de vitesses multiétagée selon la revendication 1, **caractérisée en ce que** le quatrième arbre (27) est de plus accouplé à une roue solaire du quatrième train planétaire (7) et peut être relié à un huitième arbre (29) au moyen d'un troisième embrayage (28), lequel huitième arbre est accouplé à une couronne dentée du quatrième train planétaire (7) et peut être fixé sur le boîtier (1) par le biais d'un deuxième frein (9), l'arbre de sortie (31) pouvant être accouplé à un septième arbre (33) au moyen d'un quatrième embrayage (32), lequel septième arbre est en liaison avec un porte-satellites d'un premier train planétaire (4), et une roue solaire du premier train planétaire (4) étant reliée au cinquième arbre (16) et une couronne dentée du premier train planétaire (4) étant reliée au sixième arbre (17).

8. Boîte de vitesses multiétagée selon la revendication 1, **caractérisée en ce que** l'arbre de sortie (34) peut être relié à un huitième arbre (36) au moyen d'un troisième embrayage (35), lequel huitième arbre est accouplé à une couronne dentée du quatrième train planétaire (7) et peut être fixé sur le boîtier (1) par le biais d'un deuxième frein (9), le quatrième arbre (37) étant en liaison avec une roue solaire du quatrième train planétaire (7) et le cinquième arbre (24) pouvant être accouplé à un septième arbre (26) par le biais d'un quatrième embrayage (25), lequel septième arbre est relié à une roue solaire d'un premier train planétaire (4), et un porte-satellites du premier train planétaire (4) étant accouplé à l'arbre de sortie (34) et une couronne dentée du premier train planétaire (4) étant accouplée au sixième arbre (17).

9. Boîte de vitesses multiétagée selon la revendication 1, **caractérisée en ce que** l'arbre de sortie (34) peut être relié à un huitième arbre (36) au moyen d'un troisième embrayage (35), lequel huitième arbre est accouplé à une couronne dentée du quatrième train planétaire (7) et peut être fixé sur le boîtier (1) par le biais d'un deuxième frein (9), le quatrième arbre (37) étant en liaison avec une roue solaire du quatrième train planétaire (7) et le sixième arbre (20) pouvant être accouplé à un septième arbre (22) par le biais d'un quatrième embrayage (21), lequel septième arbre est relié à une couronne dentée d'un premier train planétaire (4), et un porte-satellites du premier train planétaire (4) étant accouplé à l'arbre de sortie (34) et une roue solaire du premier train planétaire (4) étant accouplée au cinquième arbre (16).

10. Boîte de vitesses multiétagée selon la revendication 1, **caractérisée en ce que** l'arbre de sortie (38) peut être relié à un huitième arbre (36) au moyen d'un troisième embrayage (35), lequel huitième arbre est accouplé à une couronne dentée du quatrième train planétaire (7) et peut être fixé sur le boîtier (1) par le biais d'un deuxième frein (9), le quatrième arbre (37) étant en liaison avec une roue solaire du quatrième train planétaire (7) et l'arbre de sortie (38) pouvant être accouplé à un septième arbre (18) par le biais d'un quatrième embrayage (13), lequel septième arbre est relié à un porte-satellites d'un premier train planétaire (4), et une couronne dentée du premier train planétaire (4) étant accouplée au sixième arbre (17), et une roue solaire du premier train planétaire (4) étant accouplée au cinquième arbre (16).

11. Boîte de vitesses multiétagée selon l'une quelconque des revendications 2 à 10, **caractérisée en ce qu'**un premier rapport de transmission s'obtient par fermeture du deuxième frein (9), ainsi que du premier (10) et du deuxième embrayage (11), un deuxième rapport de transmission s'obtient par actionnement des deux freins (8, 9), ainsi que du deuxième embrayage (11), un troisième rapport de transmission s'obtient par fermeture des deux freins (8, 9), ainsi que du premier embrayage (10), un quatrième rapport de transmission s'obtient par actionnement des deux freins (8, 9), ainsi que du quatrième embrayage (13 ; 21 ; 25 ; 32), un cinquième rapport de transmission s'obtient par fermeture du premier frein (8), ainsi que du premier (10) et du quatrième embrayage (13 ; 21 ; 25 ; 32), un sixième rapport de transmission s'obtient par actionnement du premier frein (8), ainsi que du deuxième (11) et du quatrième embrayage (13 ; 21 ; 25 ; 32), un septième rapport de transmission s'obtient par fermeture du premier frein (8), ainsi que du troisième (12 ; 28 ; 35) et du quatrième embrayage (13 ; 21 ; 25 ; 32), un huitième rapport de transmission s'obtient par actionnement du deuxième (11), du troisième (12 ; 28 ; 35) et du quatrième embrayage (13 ; 21 ; 25 ; 32) ou par fermeture du premier (10), du deuxième (11) et du quatrième embrayage (13 ; 21 ; 25 ; 32) ou par actionnement du premier (10), du deuxième (11) et du troisième embrayage (12 ; 28 ; 35) ou par fermeture du premier (10), du troisième (12 ; 28 ; 35) et du quatrième embrayage (13 ; 21 ; 25 ; 32), un neuvième rapport de transmission s'obtient par actionnement du premier frein (8), ainsi que du deuxième (11) et du troisième embrayage (12 ; 28 ; 35), et un dixième rapport de transmission s'obtient par fermeture du premier frein (8), ainsi que du premier (10) et du troisième embrayage (12 ; 28 ; 35).

12. Boîte de vitesses multiétagée selon la revendication 11, **caractérisée en ce qu'**un premier rapport de transmission supplémentaire s'obtient par fermeture du deuxième frein (9), ainsi que du deuxième (11) et du quatrième embrayage (13 ; 21 ; 25 ; 32), et un deuxième rapport de transmission supplémentaire s'obtient par actionnement du deuxième frein (9), ainsi que du premier (10) et du quatrième embrayage (13 ; 21 ; 25 ; 32).

13. Boîte de vitesses multiétagée selon la revendication 1, **caractérisée en ce que** l'arbre de sortie (3) peut en outre être relié de manière amovible au quatrième arbre (39) par le biais d'un troisième embrayage (12) et à un septième arbre (18) au moyen d'un quatrième embrayage (13), lequel septième arbre est accouplé à un porte-satellites d'un premier train planétaire (4), une roue solaire du premier train planétaire (4) étant reliée au cinquième arbre (16) et une couronne dentée du premier train planétaire (4) étant reliée au sixième arbre (17), et une couronne dentée du quatrième train planétaire (7) étant accouplée de manière rigide au boîtier (1) et le quatrième arbre (39) pouvant être relié à un huitième arbre (41) au moyen d'un cinquième embrayage (40), lequel huitième arbre est en liaison avec une roue solaire du quatrième train planétaire (7).

14. Boîte de vitesses multiétagée selon la revendication 1, **caractérisée en ce qu'**en outre l'arbre de sortie (23) peut être relié de manière amovible au quatrième arbre (39) par le biais d'un troisième embrayage (12) et le sixième arbre (20) peut être relié de manière amovible à un septième arbre (22) au moyen d'un quatrième embrayage (21), lequel septième arbre est accouplé à une couronne dentée d'un premier train planétaire (4), un porte-satellites du premier train planétaire (4) étant en liaison avec l'arbre de sortie (23) et une roue solaire du premier train planétaire (4) étant en liaison avec le cinquième arbre (16), et une couronne dentée du quatrième train planétaire (7) étant accouplée de manière rigide au boîtier (1) et le quatrième arbre (39) pouvant être relié à un huitième arbre (41) au moyen d'un cinquième embrayage (40), lequel huitième arbre est en liaison avec une roue solaire du quatrième train planétaire (7).

15. Boîte de vitesses multiétagée selon la revendication 1, **caractérisée en ce qu'**en outre l'arbre de sortie (23) peut être relié de manière amovible au quatrième arbre (39) par le biais d'un troisième embrayage (12) et le cinquième arbre (24) peut être relié de manière amovible à un septième arbre (26) au moyen d'un quatrième embrayage (25), lequel septième arbre est accouplé à une roue solaire d'un premier train planétaire (4), un porte-satellites du premier train planétaire (4) étant en liaison avec l'arbre de sortie (23) et une couronne dentée du premier train planétaire (4) étant en liaison avec le sixième arbre (17), et une couronne dentée du quatrième train planétaire (7) étant accouplée de manière rigide au boîtier (1) et le quatrième arbre (39) pouvant être relié à un huitième arbre (41) au moyen d'un cinquième embrayage (40), lequel huitième arbre est en liaison avec une roue solaire du quatrième train planétaire (7).

16. Boîte de vitesses multiétagée selon l'une quelconque des revendications 13 à 15, **caractérisée en ce qu'**un premier rapport de transmission s'obtient par fermeture du premier (10), du deuxième (11) et du cinquième embrayage (40), un deuxième rapport de transmission s'obtient par actionnement du premier frein (8), ainsi que du deuxième (11) et du cinquième embrayage (40), un troisième rapport de transmission s'obtient par fermeture du premier frein (8), ainsi que du premier (10) et du cinquième embrayage (40), un quatrième rapport de transmission s'obtient par actionnement du premier frein (8), ainsi que du quatrième (13 ; 21 ; 25) et du cinquième embrayage (40), un cinquième rapport de transmission s'obtient par fermeture du premier frein (8), ainsi que du premier (10) et du quatrième embrayage (13 ; 21 ; 25), un sixième rapport de transmission s'obtient par actionnement du premier frein (8), ainsi que du deuxième (11) et du quatrième embrayage (13 ; 21 ; 25), un septième rapport de transmission s'obtient par fermeture du premier frein (8), ainsi que du troisième (12) et du quatrième embrayage (13 ; 21 ; 25), un huitième rapport de transmission s'obtient par actionnement du deuxième (11), du troisième (12) et du quatrième embrayage (13 ; 21 ; 25) ou par fermeture du premier (10), du deuxième (11) et du quatrième embrayage (13 ; 21 ; 25) ou par actionnement du premier (10), du deuxième (11) et du troisième embrayage (12) ou par fermeture du premier (10), du troisième (12) et du quatrième embrayage (13 ; 21 ; 25), un neuvième rapport de transmission s'obtient par actionnement du premier frein (8), ainsi que du deuxième (11) et du troisième embrayage (12), et un dixième rapport de transmission s'obtient par fermeture du premier frein (8), ainsi que du premier (10) et du troisième embrayage (12).

17. Boîte de vitesses multiétagée selon la revendication 16, **caractérisée en ce qu'**un premier rapport de transmission supplémentaire s'obtient par fermeture du deuxième (11), du quatrième (13 ; 21 ; 25) et du cinquième embrayage (40), et un deuxième rapport de transmission supplémentaire s'obtient par actionnement du premier (10), du quatrième (13 ; 21 ; 25) et du cinquième embrayage (40).

18. Boîte de vitesses multiétagée selon l'une quelconque des revendications précédentes, **caractérisée en ce que** l'arbre de sortie (3 ; 23 ; 30 ; 31 ; 34 ; 38 ; 41) sert d'entraînement et l'arbre d'entraînement (2) sert de sortie de la boîte de vitesses multiétagée.
